(19) Europäisches Patentamt
European Patent Office
Office européen des brevets

(11) **EP 1 895 709 A1**

(12) **EUROPEAN PATENT APPLICATION**
published in accordance with Art. 153(4) EPC

(43) Date of publication:
**05.03.2008 Bulletin 2008/10**

(51) Int Cl.:
*H04L 9/32* (2006.01)          *G06Q 10/00* (2006.01)
*G06F 21/20* (2006.01)          *G06Q 50/00* (2006.01)
*G06F 21/24* (2006.01)

(21) Application number: **06756829.5**

(22) Date of filing: **31.05.2006**

(86) International application number:
**PCT/JP2006/310909**

(87) International publication number:
**WO 2006/137250 (28.12.2006 Gazette 2006/52)**

(84) Designated Contracting States:
**BE DE NL**

(30) Priority: **23.06.2005 JP 2005183560**

(71) Applicant: **NEC Corporation**
**Minato-ku**
**Tokyo 108-8001 (JP)**

(72) Inventors:
• **YONEZAWA, Shoko**
**Tokyo 108-8001 (JP)**

• **SAKO, Kazue**
**Tokyo 108-8001 (JP)**

(74) Representative: **Sieckmann, Dirk Christoph**
**Betten & Resch**
**Patentanwälte**
**Theatinerstrasse 8**
**D-80333 München (DE)**

(54) **SERVICE PROVIDING SYSTEM, OUTSOURCING BUSINESS DEVICE, SERVICE PROVIDING METHOD, AND PROGRAM**

(57)     When an entrustor entrusts an outsourcer with the supply of a service for members, member information managed by the entrustor is kept secret from the outsourcer, and users can receive the service without communicating with the entrustor. For using the service, user apparatus 3 sends group signature data to outsourcer apparatus 2. Outsourcer apparatus 2 authenticates the group signature data using public information of entrustor apparatus 1. When the group signature data passes the authentication, confirming that user apparatus 3 is a member of entrustor apparatus 1, outsourcer apparatus 2 provides the service to user apparatus 3.

Fig. 1

**EP 1 895 709 A1**

## Description

Technical field:

The present invention relates to a service providing system, an outsourcer apparatus, a service providing method, and a program, and more particularly to a service providing system, an outsourcer apparatus, a service providing method, and a program for allowing an entrustor to transfer a service for the members of the entrustor to an outsourcer.

Background art:

It is more or less practiced for an entrustor having a plurality of members to transfer a service for the members to an outsourcer. In this case, the outsourcer confirms that the user, who requests a service, is a member of the entrustor and thereafter provides the service for the members to the user. Therefore, though the outsourcer does not need to authenticate individual users, but is required to confirm that each user is a member of the entrustor.

According to outsourcing systems of the background art, it is necessary for the entrustor to give the outsourcer member information that the entrustor has in order for the outsourcer to confirm whether a user is a member of the entrustor or not.

JA-P No. 2004-38494 discloses a contents providing system which makes it possible for an outsourcer to identify a user as an entrustor's member without the need for the entrustor to give its member information to the outsourcer.

When the user apparatus is to receive the service from the outsourcer apparatus (contents distribution server), the contents providing system operates as follows:

First, the user apparatus communicates with the entrustor's apparatus (user information management server) and is authenticated by the entrustor apparatus. Only when the authenticating process is completed normally, the user apparatus receives the service from the outsourcer apparatus via the entrustor apparatus.

In recent years, there has also been known a group signature system based on a group signature scheme (see Non-patent document 1).

According to the group signature system, a member of a group can create a signature indicating that the member belongs to the group. When the signature is authenticated, the fact that the signature has been generated by the member of the group can be confirmed, but the information about the creator of the signature is not known. However, an entity with a special authority can identify the creator of the signature.

Patent document 1: JA-P No. 2004-38494
Non-patent document 1: G. Ateniese, J. Camenisch, M. Joye, G. Tsudik, "A Practical and Provable Secure Coalition-Resistant Group Signature Scheme" (Advances in Cryptology - CRYPTO 2000, LNCS 1880, pp. 255 - 270, Springer-Verlag, 2000)

Disclosure of the invention:

Problems to be solved by the invention:

According to the outsourcing system of the background art, the entrustor needs to give the outsourcer the member information which the entrustor has in order for the outsourcer to confirm whether a user is a member of the entrustor or not.

Consequently, the member information of the entrustor may possibly leak from the outsourcer. For preventing the member information from leaking, the outsourcer is required to manage the member information strictly. As a result, the cost required to manage the member information is high.

According to the contents providing system disclosed in JA-P No. 2004-38494, the user needs to communicate with the entrustor each time the user requests the service. Therefore, the number of communication sessions tends to increase.

Non-patent document 1 is silent as to a system including an entrustor apparatus and an outsourcer apparatus.

It is an object of the present invention to provide a service providing system, an outsourcer apparatus, a service providing method, and a program for allowing an entrustor to transfer a service for the members of the entrustor to an outsourcer without the need for giving member information to the outsourcer.

Another object of the present invention is to provide a service providing system, an outsourcer apparatus, a service providing method, and a program for not requiring a user to communicate with an entrustor when the user receives a service from the entrustor.

Means for solving the problems:

To achieve the above objects, a service providing system according to the present invention includes a user apparatus, an entrustor apparatus for registering the user apparatus as a member for receiving a predetermined service when a registration request for enrolling the user apparatus as the member is received from the user apparatus, and an outsourcer apparatus for providing the predetermined service to the member which has requested the predetermined service on behalf of the entrustor apparatus, the arrangement being such that when the outsourcer apparatus is requested to provide the predetermined service by the user apparatus, the outsourcer apparatus authenticates whether the user apparatus is the member or not according to a group signature scheme, wherein the entrustor apparatus comprises a group key generator for generating public information, a member registration key, and an open key for use in the group signature scheme, a public information provider for providing the public information generated by the group key generator to the outsourcer apparatus, a signature key generator for generating a signature key corresponding to the user apparatus using the public information and the member registration key, in response to the registration request from the user apparatus, and a signature information provider for providing the signature key generated by the signature key generator and the public information to the user apparatus, the user apparatus comprises a group signature generator for generating group signature data using the signature key and the public information provided by the signature information provider and a request for the predetermined service, and a group signature data provider for providing the group signature data generated by the group signature generator and the request for the predetermined service to the outsourcer apparatus, and the outsourcer apparatus comprises an authenticator for authenticating whether the group signature data provided by the group signature data provider is legitimate or not using the public information provided by the public information provider, and a service provider for providing the predetermined service to the user apparatus in response to the request for the predetermined service if the authenticator judges that the group signature data is legitimate.

A service providing method according to the present invention is to be carried out by a service providing system including a user apparatus, an entrustor apparatus for registering the user apparatus as a member for receiving a predetermined service when a registration request for enrolling the user apparatus as the member is received from the user apparatus, and an outsourcer apparatus for providing the predetermined service to the member which has requested the predetermined service on behalf of the entrustor apparatus, the arrangement being such that when the outsourcer apparatus is requested to provide the predetermined service by the user apparatus, the outsourcer apparatus authenticates whether the user apparatus is the member or not according to a group signature scheme, the service providing method comprising a group key generating step in which the entrustor apparatus generates public information, a member registration key, and an open key for use in the group signature scheme, a public information providing step in which the entrustor apparatus provides the public information to the outsourcer apparatus, a signature key generating step in which the entrustor apparatus generates a signature key corresponding to the user apparatus using the public information and the member registration key, in response to the registration request from the user apparatus, a signature information providing step in which the entrustor apparatus provides the signature key and the public information to the user apparatus, a group signature generating step in which the user apparatus generates group signature data using the signature key and the public information provided by the signature information provider and a request for the predetermined service, a group signature data providing step in which the user apparatus provides the group signature data and the request for the predetermined service to the outsourcer apparatus, an authenticating step in which the outsourcer apparatus authenticates whether the group signature data provided by the group signature data provider is legitimate or not using the public information provided by the public information provider, and a service providing step in which the outsourcer apparatus provides the predetermined service to the user apparatus in response to the request for the predetermined service if the authenticator judges that the group signature data is legitimate.

An outsourcer apparatus according to the present invention is connected to a user apparatus and an entrustor apparatus for registering the user apparatus as a member for receiving a predetermined service when a registration request for enrolling the user apparatus as the member is received from the user apparatus, the outsourcer apparatus for providing the predetermined service to the member which has requested the predetermined service on behalf of the entrustor apparatus, the arrangement being such that when the outsourcer apparatus is requested to provide the predetermined service by the user apparatus, the outsourcer apparatus authenticates whether the user apparatus is the member or not according to a group signature scheme, the outsourcer apparatus comprising a receiver for receiving public information for use in the group signature scheme from the entrustor apparatus, an authenticator for authenticating whether group signature data is legitimate or not using the public information when the group signature data and a request for the predetermined service are received from the user apparatus, and a service provider for providing the predetermined service to the user apparatus in response to the request for the predetermined service if the authenticator judges that the group signature data is legitimate

A service providing method according to the present invention is to be carried out by an outsourcer apparatus connected to a user apparatus and an entrustor apparatus for registering the user apparatus as a member for receiving a predetermined service when a registration request for enrolling the user apparatus as the member is received from the user apparatus, the outsourcer apparatus for providing the predetermined service to the member which has requested the predetermined service on behalf of the entrustor apparatus, the arrangement being such that when the outsourcer apparatus is requested to provide the predetermined service by the user apparatus, the outsourcer apparatus authenticates whether the user apparatus is the member or not according to a group signature scheme, the service providing method comprising a receiving step of receiving public information for use in the group signature scheme from the entrustor apparatus, an authenticating step of authenticating whether group signature data is legitimate or not using the public information when the group signature data and a request for the predetermined service are received from the user apparatus, and a service providing step of providing the predetermined service to the user apparatus in response to the request for the predetermined service if the group signature data are legitimate.

According to the present invention as described above, the outsourcer apparatus authenticates whether the user apparatus is a member of the entrustor apparatus or not using only the public information of the entrustor apparatus according to the group signature scheme. Therefore, the outsourcer apparatus can determine whether the user apparatus is a member of the entrustor apparatus or not without using private information of the member unlike the background art.

Therefore, it is not necessary for the entrustor to provide the private information that is managed by the entrustor to the outsourcer. It is thus possible to avoid the danger of the leakage of member information (private information).

The outsourcer can solely confirm whether the user is a member of the entrustor or not, without using member information. Therefore, when the user is to receive a service from the outsourcer, the user does not need to communicate with the entrustor unlike the background art.

Preferably, the user apparatus generates a group signature key based on the public information, converting the group signature key into converted data, and providing the converted data to the entrustor apparatus, the entrustor apparatus generates a digital signature using the converted data provided by the user apparatus and the member registration key, thereby generating a member certificate as the signature key, and the user apparatus generates the group signature data using the request for the predetermined service, the member certificate, the group signature key, and the public information.

According to the above invention, it is possible to use a group verification scheme disclosed in Non-patent document 1.

Preferably, the entrustor apparatus acquires the group signature data from the outsourcer apparatus, and identifies the user apparatus, which has provided the group signature data, from among members of the entrustor apparatus, using the group signature data and the open key.

According to the above invention, the entrustor apparatus can identify the user apparatus which has requested the predetermined service without the outsourcer apparatus knowing.

Preferably, the entrustor apparatus calculates a usage fee for the predetermined service used by the user apparatus and charges the user apparatus with the calculated usage fee, based on the identified user apparatus and the request for the predetermined service.

According to the above invention, the entrustor apparatus can charge the user apparatus which has requested the predetermined service with a predetermined service usage fee, without the outsourcer apparatus knowing.

Preferably, members of the entrustor apparatus are divided into a plurality of groups, the entrustor apparatus generates public information, a member registration key, and an open key for use in the group signature scheme for each of the groups, provides the public information generated for each of the groups to the outsourcer apparatus, and responsive to the registration request and group selecting information from the user apparatus, selects one of the groups to which the user apparatus belongs based on the group selecting information, and generates a signature key corresponding to the user apparatus using the public information and the member registration key of the selected group, provides the signature key, the public information of the selected group, and group information indicative of the selected group, to the user apparatus, the user apparatus provides the group signature data, the request for the predetermined service, and the group information, to the outsourcer apparatus, the outsourcer apparatus authenticates whether the group signature data is legitimate or not, using the public information of the group indicated by the group information, and provides the service corresponding to the group indicated by the group information to the user apparatus in response to the request for the predetermined service if the authenticator judges that the group signature data is legitimate.

According to the above invention, it is possible to provide a service depending on the user apparatus.

Preferably, the service providing system comprises a plurality of the entrustor apparatus, each of the entrustor apparatus provides the signature key, the public information, and entrustor apparatus information indicative of the entrustor apparatus to the user apparatus, the user apparatus provides the group signature data, the request for the predetermined service, and the entrustor apparatus information to the outsourcer apparatus, and the outsourcer apparatus authenticates whether the group signature data is legitimate or not, using the public information which is provided by the entrustor apparatus indicated by the entrustor apparatus information.

According to the above invention, the outsourcer apparatus is capable of receiving service providing services from a plurality of entrustor apparatus.

A program according to the present invention controls a computer connected to a user apparatus and an entrustor apparatus for registering the user apparatus as a member for receiving a predetermined service when a registration request for enrolling the user apparatus as the member is received from the user apparatus, the computer for providing the predetermined service to the member which has requested the predetermined service on behalf of the entrustor apparatus, the arrangement being such that when the computer is requested to provide the predetermined service by the user apparatus, the computer authenticates whether the user apparatus is the member or not according to a group signature scheme, the program enabling the computer to perform a service process including a receiving process for receiving public information for use in the group signature scheme from the entrustor apparatus, an authenticating process for authenticating whether group signature data is legitimate or not using the public information when the group signature data and a request for the predetermined service are received from the user apparatus, and a service proving process for providing the predetermined service to the user apparatus in response to the request for the predetermined service if the group signature data are legitimate.

According to the above invention, it is possible for the computer to perform the above service providing method.

Advantages of the invention:

According to the present invention, since the entrustor is not required to provide member information that is managed by the entrustor to the outsourcer, it is possible to avoid the danger of the leakage of private information. Therefore, when the user is to receive a service from the outsourcer, the user does not need to communicate with the entrustor.

Brief description of the drawings:

Fig. 1 is a block diagram showing an arrangement according to a first exemplary embodiment of the present invention;
Fig. 2 is a flowchart of an operation sequence for registering a member according to the first exemplary embodiment of the present invention;
Fig. 3 is a flowchart of an operation sequence for providing a service according to the first exemplary embodiment of the present invention;
Fig. 4 is a block diagram showing an arrangement according to a second exemplary embodiment of the present invention;
Fig. 5 is a flowchart of an operation sequence for processing a charge according to the second exemplary embodiment of the present invention;
Fig. 6 is a block diagram showing an arrangement according to a third exemplary embodiment of the present invention; and
Fig. 7 is a block diagram showing an arrangement according to a fourth exemplary embodiment of the present invention.

Description of reference characters:

| | |
|---|---|
| 1, 1a, 1b | entrustor apparatus |
| 2, 2a | outsourcer apparatus |
| 3 | user apparatus |
| 4 | second entrustor apparatus |
| 5 | second user apparatus |
| 101 | group key generator |
| 102 | public information discloser |
| 103 | member registration key memory |
| 104 | open key memory |
| 105 | member registrar |
| 106 | member information memory |
| 107 | service log receiver |
| 108 | signatory identifier |
| 109 | charger |
| 110 | charge information memory |
| 111 | second group key generator |

| 112 | second member registration key memory |
| --- | --- |
| 113 | second open key memory |
| 201 | public information memory |
| 202 | service revealer |
| 203 | service provider |
| 204 | group signature authenticator |
| 205 | service log memory |
| 206 | service log provider |
| 207 | second public information memory |
| 208 | second service log memory |
| 209 | second service log provider |
| 301 | subscriber |
| 302 | member certificate memory |
| 303 | group signature key memory |
| 304 | service selector |
| 305 | group signature generator |
| 306 | random number generator |
| 307 | service requestor |

Best mode for carrying out the invention:

A best mode for carrying out the invention will be described in detail below with reference to the drawings.

A group signature system based on a group signature scheme which is used in exemplary embodiments shown below will first be described below.

The group signature system comprises a group management apparatus, a plurality of signature apparatus, and a plurality of authentication apparatus. The group management apparatus manages a group, adds members, and identifies signatories. The signature apparatus generate group signature data. The authentication apparatus authenticate group signature data.

The group signature system operates as follows:

(1) The group management apparatus generates public information, a member registration key (secret key), and an open key (secret key). The public information includes at least a public key of the member registration key (secret key) and a public key of the open key (secret key). The public information is of a value set commonly for the group. The group management apparatus secretly holds the member registration key (secret key) and the open key (secret key).

(2) The group management apparatus generates a signature key from the public information and the member registration key (secret key), and issues the signature key to the signature apparatus. The signature apparatus to which the signature key is issued becomes a member of the group. The signature key is different from signature apparatus to signature apparatus. The signature apparatus secretly holds the signature key.

(3) Using the public information and the signature key, the signature apparatus performs calculations to convert messages and uses the results of the calculations as the group signature data.

(4) The authentication apparatus receives the messages and the group signature data, and confirms whether the group signature data are proper or not using the public information. In other words, the authentication apparatus confirms whether the group signature data have been properly calculated by the signature apparatus which has the signature key issued by the group management apparatus, or not.

(5) If necessary, the group management apparatus identifies the signature apparatus which has generated the group signature data, using the open key (secret key).

The group signature data generated by the signature apparatus include data certifying that (a) the signature apparatus which have generated the group signature data is one of legitimate group members whose subscription has been accepted by the group management apparatus and (b) the group management apparatus can subsequently identify the signature apparatus, without leaking any information whatsoever as to the signature apparatus. The generated group signature data have a value that differs each time they are generated.

For authenticating the group signature data, the authentication apparatus confirms whether the group signature data certifies said (a), (b) properly or not, using the public information. Only the signature apparatus which has the signature key properly issued from the group signature apparatus can calculate group signature data that pass the authentication.

According to ordinary digital signature, it is possible to confirm the legitimacy of a signature using only public information (public key) corresponding to an individual. Similarly, according to group signature data, it is also possible to confirm the legitimacy of a signature using only public information corresponding to a group.

For example, in the group signature system disclosed in Non-patent document 1, public information includes a parameter common to the system, and a signature key issued to a signature apparatus comprise a group signature key and a member certificate.

The group signature key is of a value randomly selected by the signature apparatus and the group management apparatus which cooperate with each other, based on the public information (common parameter). This value is only known to the signature apparatus. The group signature key represents data required to prevent the group management apparatus from falsifying the signature.

The member certificate is a digital signature generated by calculations for converting converted data of the group signature key using a member registration key (secret key).

For generating group signature data for a message, the signature apparatus encrypts the member certificate with a public key corresponding to an open key. The encrypted member certificate is referred to as encrypted data. The signature apparatus then calculates converted data of the member certificate.

Then, the signature apparatus calculates certification data for certifying two conditions, i.e., (a) the value (namely, the member certificate) kept secret by the encrypted data and the converted data satisfies a formula for authenticating the digital signature for the converted data of the group signature key, and (b) the encrypted data are data generated by encrypting the value satisfying the condition (a) with the public key corresponding to the open key, using the message, the public information, the member certificate, the group signature key, the encrypted data, and the converted data.

Then, the signature apparatus outputs the encrypted data, the converted data, and the certification data as group signature data.

An authentication apparatus confirms whether the certification data included in the group signature data properly certifies the conditions (a) and (b) or not, using the message, the group signature data, and the public information.

Only the signature apparatus which is aware of the member certificate and the group signature key that are properly issued by the group management apparatus is capable of calculating certification data which can pass the authentication.

The group management apparatus decrypts the encrypted data included in the group signature data using the open key (secret key). Then, the group management apparatus seeks one, which agrees with the decrypted data, of the member certificates of all the signature apparatus that have been left upon issuance of the signature key. The signature apparatus corresponding to the member certificate that agrees with the decrypted data is the signature apparatus which has generated the group signature data.

[1st exemplary embodiment]

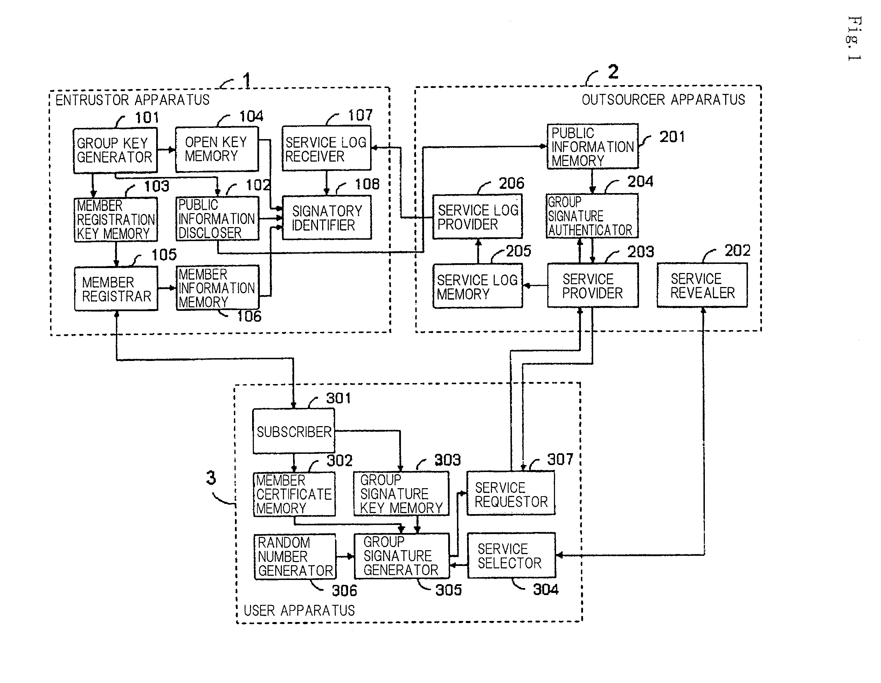

Fig. 1 is a block diagram showing a service providing system according to a first exemplary embodiment of the present invention.

As shown in Fig. 1, the service providing system, which employs a group signature scheme, comprises entrustor apparatus 1, outsourcer apparatus 2, and at least one user apparatus 3.

Entrustor apparatus 1 includes functions which the group management apparatus of a group signature system has. Outsourcer apparatus 2 includes functions which the authentication apparatus of the group signature system has. User apparatus 3 includes functions which the signature apparatus of the group signature system has.

Entrustor apparatus 1 comprises group key generator 101, public information discloser 102, member registration key memory 103, open key memory 104, member registrar 105, member information memory 106, service log receiver 107, and signatory identifier 108.

If entrustor apparatus 1 includes a memory storing therein a program for controlling operation of entrustor apparatus 1 and a computer for executing the program, then the computer may execute the program to realize group key generator 101, public information discloser 102, member registrar 105, service log receiver 107, and signatory identifier 108, and the memory may realize member registration key memory 103, open key memory 104, and member information memory 106.

Outsourcer apparatus 2 comprises public information memory 201, service revealer 202, service provider 203, group signature authenticator 204, service log memory 205, and service log provider 206.

If outsourcer apparatus 2 includes a memory storing therein a program for controlling operation of outsourcer apparatus 2 and a computer for executing the program, then the computer may execute the program to realize service revealer 202, service provider 203, group signature authenticator 204, and service log provider 206, and the memory may realize public information memory 201 and service log memory 205.

User apparatus 3 comprises subscriber 301, member certificate memory 302, group signature key memory 303, service selector 304, group signature generator 305, random number generator 306, and service requestor 307.

If user apparatus 3 includes a memory storing therein a program for controlling operation of user apparatus 3 and a computer for executing the program, then the computer may execute the program to realize subscriber 301, service selector 304, group signature generator 305, random number generator 306, and service requestor 307, and the memory may realize member certificate memory 302 and group signature key memory 303.

Entrustor apparatus 1 is used by the entrustor.

Group key generator 101 generates public information, a member registration key (secret key), and an open key (secret key) used in the group signature scheme. The public information includes at least a public key corresponding to the member registration key (secret key), a public key corresponding to the open key (secret key), and common parameters used in the group signature scheme.

Group key generator 101 provides the public information to public information discloser 102. Group key generator 101 provides the member registration key to member registration key memory 103. Group key generator 101 provides the open key to open key memory 104.

Public information discloser 102 stores the public information generated by group key generator 101.

Member registration key memory 103 stores the member registration key (secret key) generated by group key generator 101.

Open key memory 104 stores the open key (secret key) generated by group key generator 101.

When member registrar 105 receives a subscription request (a registration request to become a member for receiving a certain service) and information (private information of the user of user apparatus 3, i.e., member information) about user apparatus 3 from subscriber 301 of user apparatus 3, member registrar 105 registers user apparatus 3 as a member. Furthermore, member registrar 105 generates a member certificate for generating group signature data, based on the group signature scheme. Member registrar 105 issues the member certificate and the public information to user apparatus 3.

Member registrar 105 stores the private information and the member certificate, as related to each other, in member information memory 106.

Member information memory 106 stores the private information and the member certificate, as related to each other, for each user apparatus.

When service log receiver 107 receives a service log from service log provider 206 of outsourcer apparatus 2, service log receiver 107 provides the service log to signatory identifier 108. The service log includes group signature data generated by user apparatus 3.

When signatory identifier 108 receives the service log from service log receiver 107, signatory identifier 108 identifies the user apparatus, which has generated the group signature data included in the service log, based on the group signature scheme, using the service log, the public information stored in public information discloser 102, the open key (secret key) stored in open key memory 104, and the member certificates of all the members stored in member information memory 106.

Outsourcer apparatus 2 is used by the outsourcer.

Public information memory 201 stores the public information provided by public information discloser 102 of entrustor apparatus 1.

Service revealer 202 reveals a list of services provided by outsourcer apparatus 2 to user apparatus 3. The list represents services entrusted by entrustor. Service revealer 202 also sends information (service information) corresponding to the services and additional information thereof to service selector 304 of user apparatus 3.

Service provider 203 receives service request data from service requestor 307 of user apparatus 3. The service request data include group signature data generated by user apparatus 3.

When service provider 203 receives the service request data from service requestor 307, service provider 203 asks group signature authenticator 204 to authenticate the group signature data included in the service request data.

If group signature authenticator 204 judges that the group signature data are legitimate, then service provider 203 provide the services to user apparatus 3.

Service provider 203 also provides the service request data to service log memory 205.

Group signature authenticator 204 authenticates the group signature data provided by service provider 203 based on the group signature scheme, using the public information stored in public information memory 201.

Service log memory 205 stores the service request data provided by service provider 203 as the service log.

Service log provider 206 sends the service log stored in service log memory 205 to entrustor apparatus 1.

User apparatus 3 is used by the user.

Subscriber 301 communicates with member registrar 105 of entrustor apparatus 1 to notify entrustor apparatus 1 of a subscription request and private information of the user of user apparatus 3.

When a member registration and subscription is permitted, subscriber 301 generates a group signature key, and thereafter receives a member certificate and public information from member registrar 105.

Subscriber 301 provides the member certificate to member certificate memory 302, and provides the group signature key to group signature key memory 303. For example, subscriber 301 provides the public information together with the member certificate to member certificate memory 302.

When group signature data are calculated, subscriber 301 may acquire public information from public information discloser 102 of entrustor apparatus 1,and provide the public information to group signature generator 305.

Member certificate memory 302 stores the member certificate and the public information provided by subscriber 301.

Group signature key memory 303 stores the group signature key provided by subscriber 301.

Service selector 304 selects a service specified by the user, from the services revealed by service revealer 202 of outsourcer apparatus 2.

When service selector 304 receives service information and additional information from service revealer 202, service selector 304 sends the service information and the additional information to group signature generator 305.

Group signature generator 305 calculates group signature data based on the group signature scheme, using the service information and the additional information received from service selector 304, the public information stored in public information discloser 102 of entrustor apparatus 1, the member certificate stored in member certificate memory 302, the group signature key stored in group signature key memory 303, and a random number generated by random number generator 306.

Group signal generator 305 provides the service information and the additional information received from service selector 304 and the group signature data to service requestor 307.

Random number generator 306 provides the random number to group signal generator 305.

When service requestor 307 receives the service information, the additional information, and the group signature data from group signal generator 305, service requestor 307 sends the service information, the additional information, and the group signature data as service request data to outsourcer apparatus 2.

Operation of the first exemplary embodiment will be described below. (Key generation)

First, in entrustor apparatus 1, group key generator 101 generates public information, a member registration key, and an open key used in the group signature system. Group key generator 101 provides the public information to public information discloser 102, provides the member registration key (secret key) to member registration key memory 103, and provides the open key (secret key) to open key memory 104.

(Key notification)

The entrustor makes a contract with the outsourcer for entrusting outsourcer apparatus 2 to provide services for members of the entrustor.

Public information discloser 102 of entrustor apparatus 1 sends the public information stored in public information discloser 102 as information required for member authentication to outsourcer apparatus 2.

When public information memory 201 of outsourcer apparatus 2 receives the public information, public information memory 201 stores the public information.

(Member registration)

Based on an operation made by the user, user apparatus 3 causes entrustor apparatus 1 to perform a user registration process and acquires information required to generate group signature data from entrustor apparatus 1. This process need once in user registration.

It is assumed that entrustor apparatus 1 has revealed information required to become a member of entrustor apparatus 1.

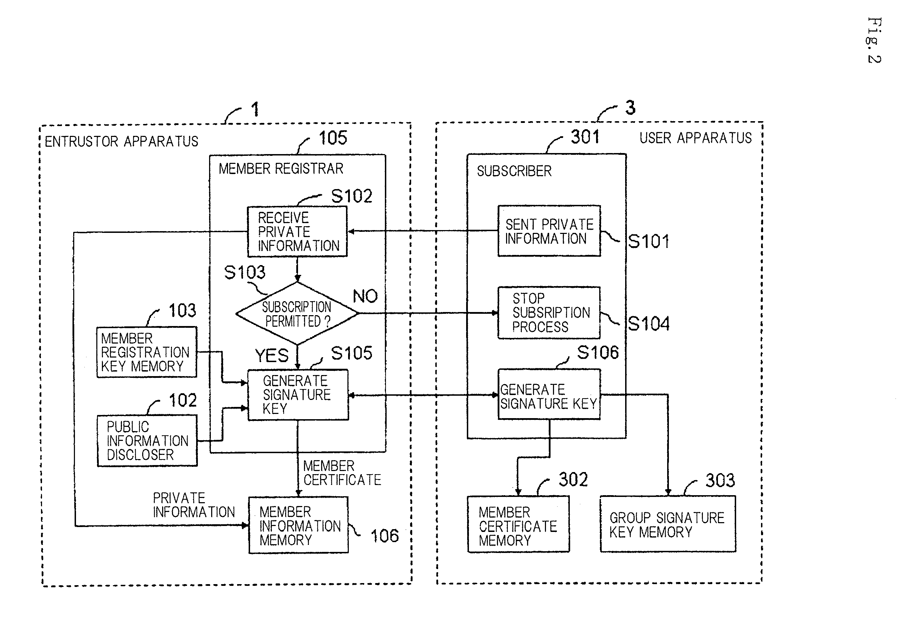

Fig. 2 is a flowchart of an operation sequence for registering a member. Those parts shown in Fig. 2 which are identical to those shown in Fig. 1 are denoted by identical reference characters.

An operation sequence for registering a member will be described below with reference to Fig. 2.

When subscriber 301 of user apparatus 3 has received private information (e.g., name, address, and age) required become a member of entrustor apparatus 1 from the user, subscriber 301 executes step S101.

In step S101, subscriber 301 sends the private information and a subscription request to entrustor apparatus 1. When subscriber 301 has sent the private information and the subscription request to entrustor apparatus 1, member registrar 105 of entrustor apparatus 1 executes step S102.

In step S102, member registrar 105 receives the private information and the subscription request. When member registrar 105 has received the private information and the subscription request, member registrar 105 executes step S103.

In step S103, member registrar 105 determines whether the user with the private information is allowed to become a member of the entrustor or not, based on the private information. For example, member registrar 105 determines whether the age indicated by the private information satisfies a member subscription requirement or not.

If member registrar 105 makes a judgment to refuse to register the user as a member of the entrustor (subscription), then member registrar 105 notifies user apparatus 3 of a subscription refusal. When user apparatus 3 has received the subscription refusal, user apparatus 3 executes step S104.

In step S104, subscriber 301 of user apparatus 3 displays a message representing the subscription refusal, for example, and stops the subscription process.

If member registrar 105 makes a judgment to permit a subscription, then member registrar 105 executes step S105, and subscriber 301 executes step S106.

In steps S105, S106, member registrar 105 communicates with subscriber 301 to generate a signature key required to generate group signature data, using the public information stored in public information discloser 102 and the member registration key stored in member registration key memory 103. The signature key is made up of a member certificate and a group signature key. The group signature key is generated by subscriber 301 and represents information that is known only to user apparatus 3.

As a result of the above process, member registrar 105 acquires the member certificate and subscriber 301 acquires the member certificate and the group signature key.

Member registrar 105 stores the initially received private information in relation to the member certificate in member information memory 106.

Subscriber 301 stores the member certificate in member certificate memory 302 and stores the group signature key in group signature key memory 303.

(Service usage)

In service usage, user apparatus 3 receives services for the members from outsourcer apparatus 2.

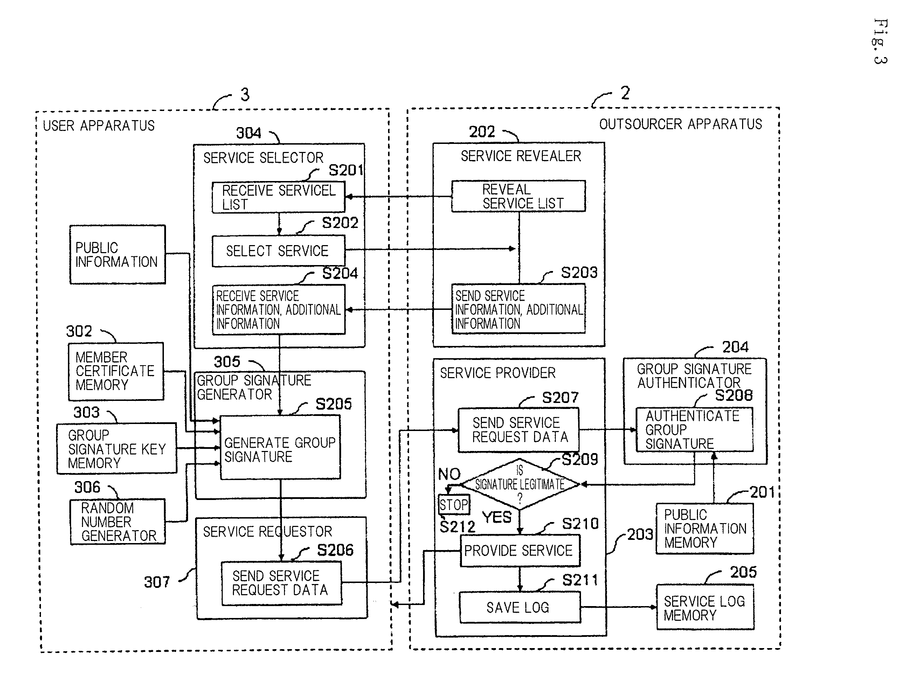

Fig. 3 is a flowchart of an operation sequence for using a service. Those parts shown in Fig. 3 which are identical to those shown in Fig. 1 are denoted by identical reference characters.

An operation sequence for using a service will be described below with reference to Fig. 3.

In step S201, service selector 304 of user apparatus 3 receives a revealed service list from service revealer 202 of outsourcer apparatus 2. User apparatus 3 displays the service list.

When the user has operated user apparatus 3 to specify a service, which the user wants to receive, from the service list, service selector 304 executes step S202.

In step S202, service selector 304 selects the specified service from the service list, and sends a selection result representing the selected service to service revealer 202.

When service revealer 202 has received the selection result, service revealer 202 executes step S203.

In step S203, service revealer 202 sends information (service information) corresponding to the selected service and additional information to service selector 304.

The additional information represents information required to make unique a message to be signed. For example, the additional information is a session ID, time information, or a random number generated by outsourcer apparatus 2.

When service revealer 202 has sent the information (service information) and the additional information to service selector 304, service selector 304 executes step S204.

In step S204, service selector 304 receives the service information and the additional information from service revealer 202, and sends the service information and the additional information to group signature generator 305.

When group signature generator 305 has received the service information and the additional information from service selector 304, group signature generator 305 executes step S205.

In step S205, group signature generator 305 calculates group signature data corresponding to the service information and the additional information, based on the group signature scheme, using the public information stored in public information discloser 102 of entrustor apparatus 1, the member certificate stored in member certificate memory 302, the group signature key stored in group signature key memory 303, and the random number generated by random number generator 306.

The group signature data are data indicating that user apparatus 3 is a member of entrustor apparatus 1.

Group signature generator 305 provides the service information, the additional information, and the group signature data to service requestor 307.

When service requestor 307 has received the service information, the additional information, and the group signature data from group signature generator 305, service requestor 307 executes step S206.

In step S206, service requestor 307 sends service request data including the service information, the additional information, and the group signature data to service provider 203 of outsourcer apparatus 2.

When service provider 203 has received the service request data from service requestor 307, service provider 203 executes step S207.

In step S207, service provider 203 notifies group signature authenticator 204 of the service request data in order to authenticate the legitimacy of the group signature data included in the service request data.

When group signature authenticator 204 has received the service request data from service provider 203, group signature authenticator 204 executes step S208.

In step S208, group signature authenticator 204 authenticates the group signature data included in the service request data based on the group signature scheme, using the public information stored in public information memory 201.

Group signature authenticator 204 notifies service provider 203 of the authentication result.

When service provider 203 has received the authentication result from group signature authenticator 204, service provider 203 executes step S209.

In step S209, service provider 203 confirms whether the authentication result indicates that the group signature data are legitimate or not.

If the authentication result indicates that the group signature data are legitimate, then service provider 203 executes step S210. If the authentication result indicates that the group signature data are not legitimate, then service provider 203 executes step S212.

In step S210, service provider 203 judges that user apparatus 3 is a member of entrustor apparatus 1, and provides the service requested by user apparatus 3 to user apparatus 3.

After having providing the service, service provider 203 executes step S211.

In step S211, service provider 203 saves the service information, the additional information, and the group signature data as the service log in service log memory 205.

In step S212, service provider 203 stops the service using operation.

(User identification)

Entrustor apparatus 1 identifies user apparatus 3, which has received the service, based on the service log saved in outsourcer apparatus 2. This process is performed to identify user apparatus 3 which has received the service in the event that a problem has occurred between outsourcer apparatus 2 and user apparatus 3 while the service is being provided.

Service log provider 206 selects a set of service information, additional information, and group signature data corresponding to a session (service log) in which user apparatus 3 will be identified, from the service log saved in service log memory 205.

Service log provider 206 sends the service information, the additional information, and the group signature data to service log receiver 107 of entrustor apparatus 1.

When service log receiver 107 receives the service information, the additional information, and the group signature data from service log provider 206, service log receiver 107 sends the service information, the additional information, and the group signature data to signatory identifier 108.

Signatory identifier 108 identifies the user apparatus, which has generated the group signature data, based on the group signature scheme, using the public information stored in public information discloser 102, the open key stored in open key memory 104, the member certificates of all the members stored in member information memory 106, and the service information, the additional information, and the group signature data sent from service log receiver 107.

There may be a case in which the user does not want entrustor apparatus 1 to know the service that the user has received via user apparatus 3. In such a case, group signature generator 305 of user apparatus 3 calculates group signature data while not including the service information in the data to be signed.

Advantages of the exemplary embodiment will be described below.

According to the exemplary embodiment, outsourcer apparatus 2 authenticates a member of entrustor apparatus 1 using only the public information of entrustor apparatus 1.

Therefore, outsourcer apparatus 2 does not require the member information managed by entrustor apparatus 1. It is not necessary for the entrustor to provide the private information that is managed by the entrustor to the outsourcer. It is thus possible to avoid the danger of the leakage of the private information that is managed by the entrustor from outside entities such as the outsourcer.

For the same reasons, the outsourcer can reduce the cost for managing the private information. Furthermore, the possibility that the private information of the user may be obtained by a third party other than the entrustor is reduced.

In the event that a problem has occurred while the service is being provided, the outsourcer can ask the entrustor to identify the user apparatus which has received the service.

User apparatus 3 can cause outsourcer apparatus 2 to confirm that user apparatus 3 is a member of entrustor apparatus 1 by presenting the group signature data generated by user apparatus 3. User apparatus 3 is thus not required to communicate with entrustor apparatus 1 when using the service.

According to the exemplary embodiment, user apparatus 3 generates a group signature key based on public information, converts the group signature key to generate converted data, and provides the converted data to entrustor apparatus 1. Entrustor apparatus 1 encrypts the converted data with a member registration key to generate a member certificate as a signature key, and provides the member certificate to user apparatus 3. User apparatus 3 generates group signature data using the request for the desired service, the member certificate, the group signature key, and the public information.

Consequently, the group authentication scheme disclosed in Non-patent document 1 can be used as the group authentication scheme.

In the exemplary embodiment, entrustor apparatus 1 acquires the group signature data from outsourcer apparatus 2, and identifies user apparatus 3, which has provided the group signature data, among the members, using the group signature data and the open key.

Entrustor apparatus 1 is thus capable of identifying user apparatus 3, which has requested the desired service, without outsourcer apparatus 2 knowing.

[2nd exemplary embodiment]

A service providing system according to a second exemplary embodiment of the present invention will be described below with reference to the drawings.

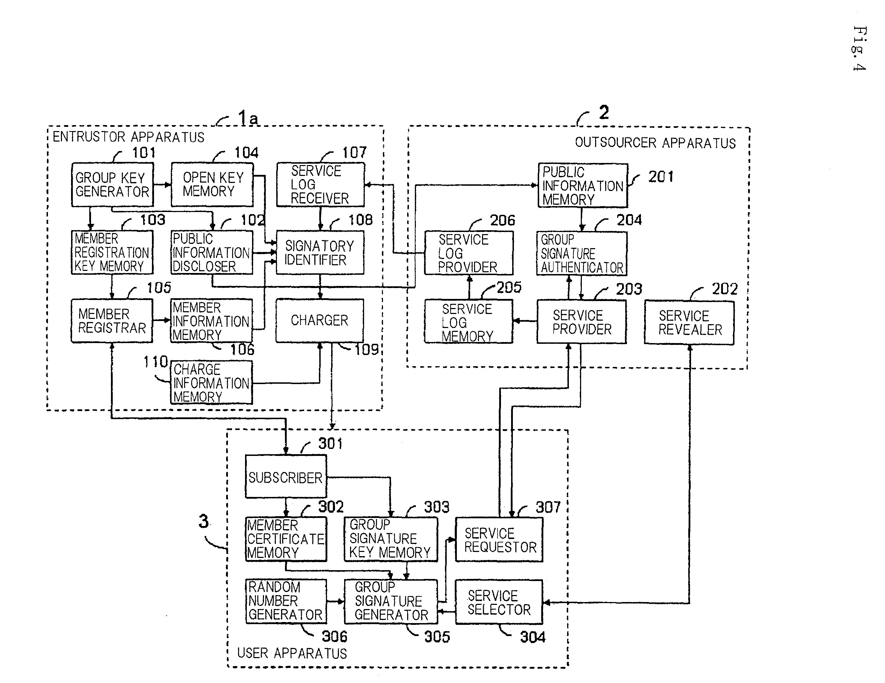

Fig. 4 is a block diagram showing the present service providing system. Those parts shown in Fig. 4 which are identical to those shown in Fig. 1 are denoted by identical reference characters.

As shown in Fig. 4, the present service providing system includes entrustor apparatus 1 a, outsourcer apparatus 2, and user apparatus 3.

Entrustor apparatus 1a comprises the arrangement of entrustor apparatus 1, charger 109, and charging information memory 110.

If entrustor apparatus 1 a includes a memory storing therein a program for controlling operation of entrustor apparatus 1a and a computer for executing the program, then the computer may execute the program to realize charger 109, and the memory may realize charging information memory 110.

Charger 109 totals service usage statuses of user apparatus based on users identified by signatory identifier 108. Charger 109 determines usage fees of the respective users based on the information stored in charging information memory 110, and notifies (charges) the user apparatus of (with) the usage fees.

Charging information memory 110 stores information about a charging method for service usage. The charging method may be, for example, a pay-as-you-go method depending on the number of times that a service is used, or a charging method depending on the type of a service used.

Outsourcer apparatus 2 and user apparatus 3 are identical in arrangement to outsourcer apparatus 2 and user apparatus 3 according to the first exemplary embodiment.

Operation of the second exemplary embodiment will be described below.

The key generation of entrustor apparatus 1 a, the notification of outsourcer apparatus 2 of the public information, the process of registering user apparatus 3 to subscribe to entrustor apparatus 1 a, and the process of making the user apparatus use the service are carried out in the same manner as with the first exemplary embodiment.

(Charging process)

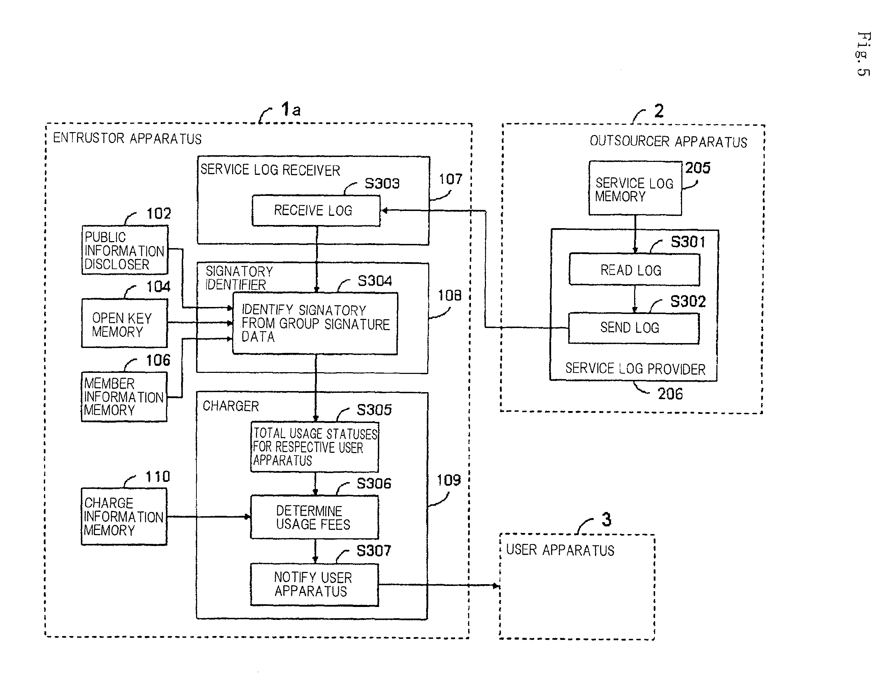

Fig. 5 is a flowchart of an operation sequence for processing a charge. Those parts shown in Fig. 5 which are identical to those shown in Fig. 1 are denoted by identical reference characters. The operation sequence for processing a charge will be described below with reference to Fig. 5.

Entrustor apparatus 1 a collects the service log from outsourcer apparatus 2 per constant interval.

Specifically, service log provider 206 of outsourcer apparatus 2 executes step S301 per constant time.

In step S301, service log provider 206 reads the service log from service log memory 205. When service log provider 206 has read the service log, service log provider 206 executes step S302.

In step S302, service log provider 206 sends the service log to service log receiver 107 of entrustor apparatus 1. The service log may be sent and received off-line, rather than via a network.

When service log provider 206 has sent the service log, service log receiver 107 executes step S303.

In step S303, service log receiver 107 receives the service log from service log provider 206, and sends service information, additional information, and group signature data included in the service log to signatory identifier 108.

When signatory identifier 108 has received the service information, the additional information, and the group signature data, signatory identifier 108 executes step S304.

In step S304, signatory identifier 108 identifies the user apparatus, which have generated the group signature data, based on the group signature scheme, using the group signature data, the public information stored in public information discloser 102, the open key stored in open key memory 104, and the member certificates of all the members stored in member information memory 106.

When signatory identifier 108 identifies all the user apparatus in the service log, signatory identifier 108 provides the service information and user apparatus information representing the identified user apparatus to charger 109.

When charger 109 has received the service information and the user apparatus information, charger 109 executes step S305.

In step S305, charger 109 totals service usage statuses of the user apparatus based on the service information and the user apparatus information. When charger 109 has totaled service usage statuses, charger 109 executes step S306.

In step S306, charger 109 calculates usage fees of the respective user apparatus according to the usage statuses and the charging method stored in charging information memory 110. When charger 109 has calculated usage fees of the respective user apparatus, charger 109 executes step S307.

In step S307, charger 109 notifies (charges) the user apparatus of (with) the calculated usage results.

Advantages of the present exemplary embodiment will be described below.

According to the exemplary embodiment, entrustor apparatus 1a receives a service log from outsourcer apparatus 2, and identifies a user apparatus which has generated group signature data included in the service log, using a signature identifying function of the group signature system.

Therefore, the entrustor apparatus is capable of identifying the user apparatus, which has requested the desired service, without the outsourcer apparatus knowing

Based on the identified user apparatus and the request for the desired service, entrustor apparatus 1a calculates the fee for the usage of the desired service by the user apparatus, and charges the user apparatus with the usage fee.

Consequently, entrustor apparatus 1a is capable of charging the user apparatus which has requested the desired service with the service usage fee without the outsourcer apparatus knowing.

[3rd exemplary embodiment]

A service providing system according to a third exemplary embodiment of the present invention will be described below with reference to the drawings.

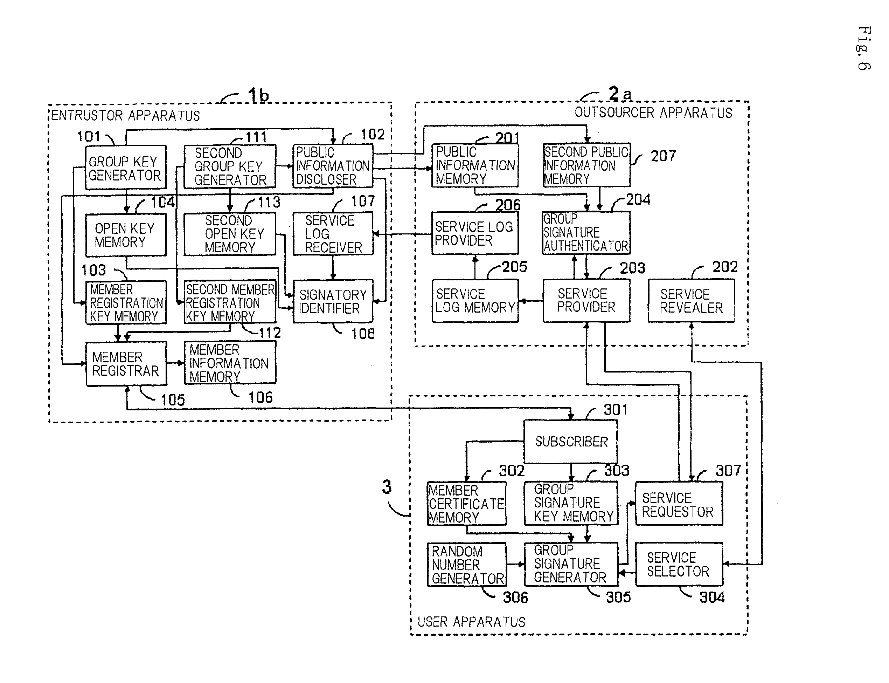

Fig. 6 is a block diagram showing the present service providing system. Those parts shown in Fig. 6 which are identical to those shown in Fig. 1 are denoted by identical reference characters.

According to the third exemplary embodiment, entrustor apparatus 1b sets a plurality of groups as members. In a member registering process, entrustor apparatus 1b determines a group to which user apparatus 3 will belong, depending on the qualification of user apparatus 3, and issues a group signature key corresponding to the group.

A group setting method may be, for example, a method of classifying groups based on member qualifications, e.g., member fees, or a method of classifying groups based on private information, e.g., male and female.

Outsourcer apparatus 2a changes services to be provided to user apparatus 3 depending on the group to which user apparatus 3 belongs.

As shown in Fig. 6, the service providing system comprises entrustor apparatus 1b, outsourcer apparatus 2a, and user apparatus 3.

Entrustor apparatus 1b includes a plurality of group key generators, a plurality of member registration key memories, and a plurality of open key memories.

Fig. 6 shows an example in which entrustor apparatus 1b includes two group key generators, two member registration key memories, and two open key memories. Specifically, entrustor apparatus 1b comprises the arrangement of entrustor apparatus 1 shown in Fig. 1 or the arrangement of entrustor apparatus 1a shown in Fig. 4, second group key generator 111, second member registration key memory 112, and second open key memory 113.

If entrustor apparatus 1b includes a memory storing therein a program for controlling operation of entrustor apparatus 1b and a computer for executing the program, then the computer may execute the program to realize second group key generator 111, and the memory may realize second member registration key memory 112 and second open key memory 113.

As with group key generator 101, second group key generator 111 generates second public information, a second member registration key (secret key), and a second open key (secret key) used in the group signature system.

Second group key generator 111 provides the second public information to public information discloser 102, provides the second member registration key to second member registration key memory 112, and provides the second open key to second open key memory 113.

Second member registration key memory 112 stores the second member registration key generated by second group key generator 111.

Second open key memory 113 stores the second open key generated by second group key generator 111.

Outsourcer apparatus 2a comprises the arrangement of outsourcer apparatus 2 and second public information memory 207.

Second public information memory 207 stores the second public information sent from public information discloser 102 of entrustor apparatus 1b.

User apparatus 3 is identical in arrangement to user apparatus 3 according to the first exemplary embodiment

Operation of the third exemplary embodiment will be described below.

(Key generation)

First, in entrustor apparatus 1 b, group key generator 101 and second group key generator 111 generate respective keys used in the group signature system.

Group key generator 101 provides the first public information to public information discloser 102, provides the first member registration key to member registration key memory 103, and provides the first open key to open key memory 104.

Second group key generator 111 provides the second public information to public information discloser 102, provides the second member registration key to second member registration key memory 112, and provides the second open key to second open key memory 113.

(Key notification)

Public information discloser 102 of entrustor apparatus 1 b sends the first public information and the second public information to outsourcer apparatus 2a.

In outsourcer apparatus 2a, public information memory 201 stores the second public information, and second public information memory 207 stores the second public information.

The group corresponding to the first public information will hereinafter referred to as group 1, and the group corresponding to the second public information as group 2.

(Member registration)

Based on an operation made by the user, user apparatus 3 causes entrustor apparatus 1 b to perform a user registration process and acquires information required to generate group signature data from entrustor apparatus 1b. This process is required only once upon member registration.

An operation sequence for registering a member will be described below again with reference to Fig. 2.

The user enters private information (e.g., name and address) required to become a member of entrustor apparatus 1 b, and information (group selecting information) required to select a group to which the user is to belong, into user apparatus 3.

For example, if a group to which the user is to belong is classified by member qualification, then the user enters a desired member qualification as group selecting information into user apparatus 3. If a group to which the user is to belong is classified by gender of the user, then the user enters gender information as group selecting information into user apparatus 3.

In the present exemplary embodiment, it is assumed that the user enters a member qualification as group selecting information into user apparatus 3.

When subscriber 301 of user apparatus 3 has received the private information and the group selecting information from the user, subscriber 301 executes step S101.

In step S101, subscriber 301 sends the private information, the group selecting information, and a subscription request to entrustor apparatus 1 b.

When subscriber 301 has sent the private information, the group selecting information, and the subscription request to entrustor apparatus 1b, member registrar 105 executes step S102.

In step S102, member registrar 105 receives the private information, the group selecting information, and the subscription request. When member registrar 105 has received the private information, the group selecting information, and the subscription request, member registrar 105 executes step S103.

In step S103, member registrar 105 determines whether the user with the private information is allowed to become a member of the entrustor or not, based on the private information.

If member registrar 105 makes a judgment to permit a subscription, then member registrar 105 selects a group to which the user is to belong, according to the group selecting information.

In the present exemplary embodiment, member registrar 105 selects either group 1 or group 2.

When member registrar 105 has selected a group, member registrar 105 executes step S105.

In step S105, member registrar 105 communicates with subscriber 301 to generate a signature key required to generate group signature data of the selected group, using the public information of the selected group and the member registration key. Member registrar 105 provides the signature key and group information representative of the selected group to user apparatus 3.

Subsequent operation is the same as the operation of the first exemplary embodiment.

(Service usage)

In service usage, user apparatus 3 receives services for the members from outsourcer apparatus 2a.

Outsourcer apparatus 2a changes services to be provided to user apparatus 3 depending on the group to which user apparatus 3 belongs.

An operation sequence in which only user apparatus 3 belonging to group 2 receives a service will be described below.

The operation sequence which is different from the operation of the first exemplary embodiment will mainly be described below again with reference to Fig. 3.

In step S206 shown in Fig. 3, service requestor 307 sends the service information, the additional information, the group signature data, and the information (group information) representing the group to which user apparatus 3 belongs, to service provider 203 of outsourcer apparatus 2.

In the present exemplary embodiment, the group information representative of "group 2" is sent.

In step S207, service provider 203 notifies group signature authenticator 204 of the service request data and the group information (group 2) in order to authenticate the legitimacy of the group signature data included in the service request data.

When group signature authenticator 204 has received the service request data and the group information from service provider 203, group signature authenticator 204 executes step S208.

In step S208, group signature authenticator 204 selects public information to be used according to the group information (group 2).

In the present exemplary embodiment, group signature authenticator 204 authenticates the group signature data using the second public information stored in second public information memory 207, and notifies service provider 203 of the authentication result.

In step S209, if the authentication result indicates that the group signature data are legitimate, then service provider 203 judges that user apparatus 3 belongs to group 2 and executes step S210. After having providing the service, service provider 203 executes step S211.

In step S211, service provider 203 saves the service information, the additional information, the group signature data, and the group information in service log memory 205.

(User identification)

When signatory identifier 108 has received the service log, signatory identifier 108 selects the open key stored in open key memory 104 or the second open key stored in second open key memory 113 according to the group information included in the service log. Signatory identifier 108 identifies the user apparatus which has generated the group signature data included in the service log, using the selected open key.

Advantages of the present exemplary embodiment will be described below.

According to the present exemplary embodiment, entrustor apparatus 1 b sets a plurality of groups to which user apparatus 3 is able to belong, and outsourcer apparatus 2a authenticates whether the user apparatus is a member of entrustor apparatus 1 b in each of the groups or not according to the group signature scheme.

Therefore, it is possible to provide a service matching the user apparatus.

Outsourcer apparatus 2a can confirm the qualification or part of the private information of user apparatus 3, and hence can set a finer service providing range.

[4th exemplary embodiment]

A service providing system according to a fourth exemplary embodiment of the present invention will be described below with reference to the drawings.

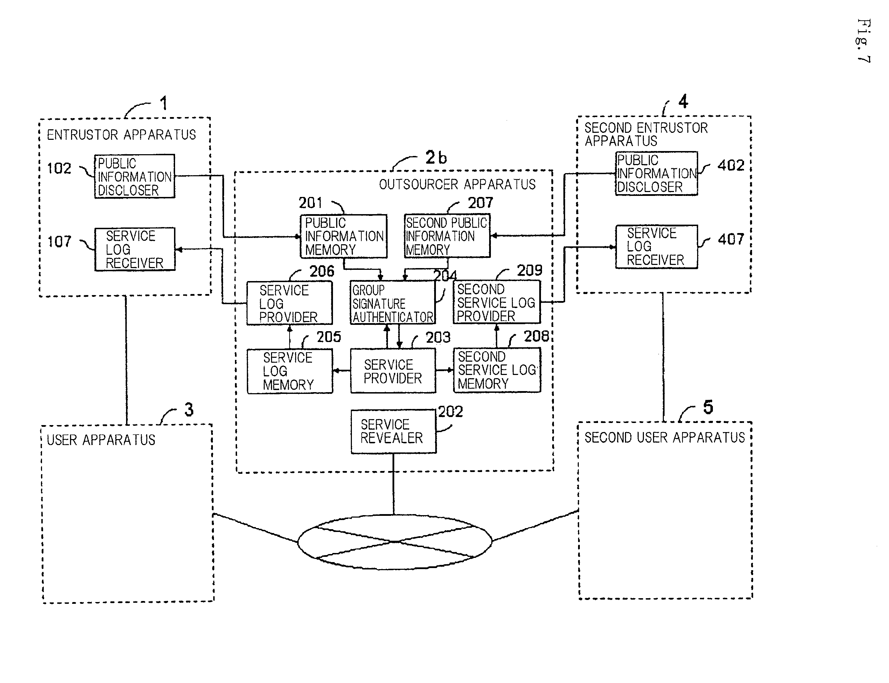

Fig. 7 is a block diagram showing the present service providing system. Those parts shown in Fig. 7 which are identical to those shown in Fig. 6 are denoted by identical reference characters.

According to the fourth exemplary embodiment, outsourcer apparatus 2b is entrusted with the supply of services by a plurality of entrustor apparatus. Fig. 7 shows in block form an example in which outsourcer apparatus 2b provides an identical service to members of two entrustor apparatus.

As shown in Fig. 7, the present service providing system comprises entrustor apparatus 1, outsourcer apparatus 2b, user apparatus 3, second entrustor apparatus 4, and second user apparatus 5.

Entrustor apparatus 1 and second entrustor apparatus 4 are identical in arrangement to entrustor apparatus 1 shown in Fig. 1 or entrustor apparatus 1a shown in Fig. 4.

Outsourcer apparatus 2b includes second service log memory 208 and second service log provider 209 in addition to the arrangement of outsourcer apparatus 2a.

If outsourcer apparatus 2b includes a memory storing therein a program for controlling operation of outsourcer apparatus 2b and a computer for executing the program, then the computer may execute the program to realize second service log provider 209, and the memory may realize second service log memory 208.

Second service log memory 208 stores service request data provided by a member of second entrustor apparatus 4 as a service log.

Second service log provider 209 sends the service log stored in second service log memory 208 to second entrustor apparatus 4.

User apparatus 3 and second user apparatus 5 are identical in arrangement to user apparatus 3 shown in Fig. 1.

Operation of the fourth exemplary embodiment will be described below.

Keys are generated by entrustor apparatus 1 and second entrustor apparatus 4 in the same manner as a key is generated according to the first exemplary embodiment. Entrustor apparatus 1 sends public information thereof to outsourcer apparatus 2b. Second entrustor apparatus 4 sends public information thereof to outsourcer apparatus 2b.

In outsourcer apparatus 2b, public information memory 201 stores the public information of entrustor apparatus 1, and second public information memory 207 stores the public information of second entrustor apparatus 4.

User apparatus 3 registers itself as a member in entrustor apparatus 1 and acquires a signature key. At this time, entrustor apparatus 1 provides entrustor apparatus information indicative of entrustor apparatus 1, together with the signature key, to user apparatus 3.

Second user apparatus 5 registers itself as a member in second entrustor apparatus 4 and acquires a signature key. At this time, second entrustor apparatus 4 provides entrustor apparatus information indicative of entrustor apparatus 4, together with the signature key, to user apparatus 5.

When user apparatus 3 or second user apparatus 5 is to receive a service from outsourcer apparatus 2b, the user apparatus sends data (entrustor apparatus information) indicative of the entrustor apparatus to which the user apparatus belongs, in addition to the service information, the additional information, and the group signature data, in step S206 shown in Fig. 3.

In step S208, group signature authenticator 204 judges the entrustor apparatus to which user apparatus 3 belongs based on the data (entrustor apparatus information) indicative of the entrustor apparatus, and thereafter authenticates the group signature data, using the public information corresponding to the judged entrustor apparatus.

In step S211, service provider 203 stores the service log in service log memory 205 or second service log memory 208 according to the data (entrustor apparatus information) indicative of the entrustor apparatus to which user apparatus 3 belongs.

In outsourcer apparatus 2b, service log provider 206 sends the service log for the member of entrustor apparatus 1 to entrustor apparatus 1. Second service log provider 209 sends the service log for the members of second entrustor apparatus 4 to second entrustor apparatus 4.

In the present exemplary apparatus, entrustor apparatus 1 and second entrustor apparatus 4 entrust outsourcer apparatus 2b with the supply of the same service. However, they may entrust outsourcer apparatus 2b with the supply of different services.

Advantages of the present exemplary embodiment will be described below.

According to the present exemplary embodiment, outsourcer apparatus 2 authenticates a user apparatus according to the group signature scheme for each of the entrustor apparatus.

Therefore, outsourcer apparatus 2 can be entrusted with services from a plurality of entrustor apparatus.

Embodiments

[Embodiment 1]

A first embodiment of the present invention will be described below with reference to Fig. 1. The present embodiment corresponds to the first exemplary embodiment of the present invention.

A group signature system used in the present embodiment is based on the group signature scheme disclosed in Non-patent document 1.

(Key generation)

Initially, group key generator 101 of entrustor apparatus 1 defines constants common to the service providing system.

First, group key generator 101 defines security parameters $\varepsilon$, k, lp.

Then, group key generator 101 selects $\lambda 1$, $\lambda 2$, $\gamma 1$, $\gamma 2$ such that they satisfy $\lambda 1 > \varepsilon (\lambda 2 + k)$, $\lambda 2 > 4lp$, $\gamma 1 > \varepsilon (\gamma 2 + k)$, $\gamma 2 > \lambda 1 + 2$.

Then, group key generator 101 defines collision-resistant hash function H.

Then, group key generator 101 provides ε, k, lp, λ1, λ2, γ1, γ2, H to public information discloser 102.

Next, group key generator 101 generates a member registration key.

First, group key generator 101 selects prime numbers p', q' having a magnitude of lp bits.

Then, group key generator 101 calculates p = 2p' + 1, q = 2q' + 1, and establishes n = pq.

Then, group key generator 101 randomly selects a, a0, g, h from a group of quadratic residues of n.

Then, group key generator 101 provides (p', q') to member registration key memory 103, and provides (n, a, a0, g, h) to public information discloser 102.

Then, group key generator 101 generates an open key.

Group key generator 101 randomly selects x from a multiplicative group of prime numbers p'q', and calculates $y = g^x \bmod n$.

Group key generator 101 provides x to open key memory 104, and provides y to public information discloser 102.

(Key notification)

Entrustor apparatus 1 sends parameters (ε, k, lp, λ1, λ2, γ1, γ2), collision-resistant hash function H, and public keys (n, a, a0, g, h, y) which have been disclosed to public information discloser 102, to outsourcer apparatus 2 which has been contracted.

Outsourcer apparatus 2 stores these values in public information memory 201.

(Member registration)

User apparatus 3 requests entrustor apparatus 1 to register itself as a member. First, user apparatus 3 sends private information required for a member registration and a subscription request to entrustor apparatus 1. The private information represents "name", "address", and "mail address", for example.

When entrustor apparatus 1 has received the private information and the subscription request, entrustor apparatus 1 determines whether a subscription for user apparatus 3 is permitted or not.

If entrustor apparatus 1 permits a subscription for user apparatus 3, then entrustor apparatus 1 sends information representing a permission to user apparatus 3.

When a subscription for user apparatus 3 has been permitted, entrustor apparatus 1 and user apparatus 3 cooperate with each other in generating a signature key for generating group signature data.

As a result of the generating process, user apparatus 3 acquires group signature key xi and a member certificate (Ai, ei) which satisfies:

[Equation 1]

$$a^{x_i} a_0 = A_i^{e_i}$$

A method of generating xi and (Ai, ei) will hereinafter be described below.

Subscriber 301 of user apparatus 3 randomly selects tilde xi from between 0 and 2^λ2, and randomly selects tilde ri from between 0 and n^2, Then, subscriber 301 calculates:

[Equation 2]

$$C_1 = g^{\tilde{x}_i} h^{\tilde{r}}$$

Subscriber 301 generates certifying data indicating that it has correctly generated tilde xi and tilde ri. Subscriber 301 selects random numbers t1, t2 which satisfy:

[Equation 3]

$$t_1 \in \left[0, 2^{\lambda_2}\right] t_2 \in \left[0, n^2\right]$$

and calculates:

[Equation 4]

$$c_1 = H\left(g\|h\|g^{t_1} h^{t_2}\right)$$

$$s_1 = t_1 - c_1 \tilde{x}_1$$

$$s_2 = t_2 - c_1 \tilde{r}$$

Subscriber 301 sends (C1, c1, s1, s2) to entrustor apparatus 1.

When member registrar 105 of entrustor apparatus 1 has received C1, c1, s1, s2, member registrar 105 confirms whether the equation:

[Equation 5]

$$c_1 = H\left(g\|h\|C_1^{c_1} g^{s_1} h^{s_2}\right)$$

is satisfied or not.

If member registrar 105 is able to confirm that the above equation is satisfied, then member registrar 105 randomly selects αi and βi which satisfy the condition:

[Equation 6]

$$\alpha_i, \beta_i \in \left[0, 2^{\lambda_2}\right]$$

and sends αi and β i to user apparatus 3.

When subscriber 301 has received α i and β i, subscriber 301 calculates:

[Equation 7]

$$x_i = 2^{\lambda_1} + \left( \alpha_i \tilde{x}_i + \beta_i \bmod 2^{\lambda_2} \right)$$

The calculated xi becomes a group signature key.

The group signature key xi is thus randomly generated by entrustor apparatus 1 and user apparatus 3. However, entrustor apparatus 1 is unable to calculate a group signature key.

Then, subscriber 301 calculates:

[Equation 8]

$$C_2 = a^{x_i} \bmod n$$

Subscriber 301 generates certifying data indicating that it has correctly generated xi.

Subscriber 301 selects random numbers t3, t4, t5 which satisfy the condition:

[Equation 9]

$$t_3 \in \pm \{0,1\}^{\in(\lambda_2 + k)}, t_4 \in \pm \{0,1\}^{\in(\lambda_2 + k)}, t_5 \in \pm \{0,1\}^{\in(2lp + \lambda_2 + k)}$$

and calculates:

[Equation 10]

$$c_2 = H\left( g \| h \| d \| C_1 \| C_2 \| \alpha_i \| \beta_i \| a^{t_3} \| g^{t_3} \left( g^{2^{\lambda_2}} \right)^{t_4} h^{t_5} \right)$$

$$s_3 = t_3 - c_2 \left( x_i - 2^{\lambda_1} \right)$$

$$s_4 = t_4 - c_2 \left( \left( \alpha_i \tilde{x}_i + \beta_i - x_i + 2^{\lambda_1} \right) / 2^{\lambda_2} \right)$$

$$s_5 = t_5 - c \alpha_i \tilde{r}$$

Then, subscriber 301 sends (C2, c2, s3, s4, s5) to entrustor apparatus 1,

When member registrar 105 of entrustor apparatus 1 has received C2, c2, s3, s4, s5, member registrar 105 checks whether the equation:

[Equation 11]

$$c_2 = H\left( g\|h\|a\|C_1\|C_2\|\alpha_i\|\beta_i\|\left(C_2 \big/ a^{2^{\lambda_1}}\right)^{c_2} a^{s_3} \right\|\left(C_1^{\alpha_i} g^{\beta_i}\right)^{c_2} g^{s_3}\left(g^{2^{\lambda_2}}\right)^{s_4} h^{s_5}\right)$$

is satisfied or not.

If member registrar 105 is able to confirm that the above equation is satisfied, then member registrar 105 randomly selects a prime number ei which satisfies the condition:

[Equation 12]

$$e_i \in \left[2^{\gamma_1} - 2^{\gamma_2}, 2^{\gamma_1} + 2^{\gamma_2}\right]$$

and calculates:

[Equation 13]

$$A_i = \left(C_2 a_0\right)^{1/e_i} \bmod n$$

1/ei cannot be calculated unless p' and q' are known.

Member registrar 105 sends the determined (Ai, ei) as a member certificate to user apparatus 3.

When subscriber 301 of user apparatus 3 has received (Ai, ei), subscriber 301 checks whether the equation:

[Equation 14]

$$a^{x_i} a_0 = A_i^{e_i}$$

is satisfied or not to confirm whether the member certificate is correctly generated or not

If subscriber 301 confirms that the member certificate is correctly generated, then subscriber 301 stores the member certificate (Ai, ei) in member certificate memory 302

Subscriber 301 stores xi as a group signature key in group signature key memory 303.

Member registrar 105 of entrustor apparatus 1 stores the initially received private information of user apparatus 3 and the member certificate (Ai, ei), as related to each other, in member information memory 106.

(Service usage)

It is assumed that outsourcer apparatus 2 provides a music distribution service to the members of entrustor apparatus 1 and that service revealer 202 of outsourcer apparatus 2 reveals information about music pieces to be distributed.

Service selector 304 of user apparatus 3 receives a list of distributable music pieces from service revealer 202 of outsourcer apparatus 2.

It is assumed that service selector 304 has received a list of "music piece 1, music piece 2, music piece 3, music piece 4, music piece 5".

Based on the user's instruction, service selector 304 selects a music piece that is to be distributed from the list, and sends the selected music piece to service revealer 202.

Service revealer 202 sends service information (indicated by m) corresponding to the selected music piece and additional information to service selector 304. In the present embodiment, a session ID (indicated by SID) for managing a session is used as the additional information.

Service selector 304 sends m and SID to group signature generator 305.

Group signature generator 305 calculates group signature data corresponding to the coupled data of m and SID.

Group signature generator 305 receives a 21p-bit random number w from random number generator 306.

Group signature generator 305 calculates converted data of (Ai, ei):

[Equation 15]

$$T_1 = Aiy^w \bmod n, T_2 = g^w \bmod n, T_3 = g^{e_i} h^w \bmod n$$

based on the random number w, the member certificate (Ai, ei), and the public information disclosed by public information discloser 102.

Then, group signature generator 305 generates data representing that it has correctly generated the converted data.

Random number generator 306 generates a random number r1 of $\varepsilon$ ($\gamma$ 2 + k) bits, a random number r2 of $\varepsilon$ ($\lambda$ 2 + k) bits, a random number r3 of $\varepsilon$ ($\lambda$ 1 + 2lp +k + 1) bits, and a random number r4 of $\varepsilon$ (2lp + k) bits, and provides the generated random numbers to group signature generator 305.

When group signature generator 305 has received the random numbers, group signature generator 305 calculates:

[Equation 16]

$$d_1 = T_1^{r_1} / (a^{r_2} y^{r_3}) \bmod n, d_2 = T_2^{r_1} / g^{r_3}) \bmod n, d_3 = g^{r_4} \bmod n, d_4 = g^{r_1} h^{r_4} \bmod n$$

Then, using the coupled data of m and SID, group signature generator 305 calculates:

[Equation 17]

$$c = H\left(g \| h \| y \| a_0 \| a \| T_1 \| T_2 \| T_3 \| d_1 \| d_2 \| d_3 \| d_4 \| m \| SID\right)$$

Group signature generator 305 calculates:

[Equation 18]

$$s_1 = r_1 - c(e_i - 2^{\gamma_1}), s_2 = r_2 - c(x_i - 2^{\lambda_1}), s_3 = r_3 - ce_i w s_4 = r_4 - cw$$

Group signature generator 305 provides m, SD, and the group signature data gs = (c, s1, s2, s3, s4, T1, T2, T3) to service requestor 307.

Group signature generator 305 may calculate group signature data using SID of the coupled data of m and SID, without using m, rather than calculating group signature data using the coupled data of m and SID.

Service requestor 307 sends the service information m, the additional information SID, and the group signature data gs to service provider 203 of outsourcer apparatus 2.

When service provider 203 of outsourcer apparatus 2 has received m, SID, and gs, service provider 203 sends these items of information to group signature authenticator 204 in order to authenticate the group signature data gs.

Group signature authenticator 204 calculates:

[Equation 19]

$$c' = H(g\|h\|y\|a_0\|a\|T_1\|T_2\|T_3\|a_0^c T_1^{s_1 - c2^{\lambda_1}} / (a^{s_2 - c2^{\lambda_1}} y^{s_3}) \bmod n\|$$

$$T_2^{s_1 - c2^{\gamma_1}} / g^{s_3} \bmod n\|T_2^c g^{s_4} \bmod n\|T_2^c g^{s_1 - c2^{\gamma_1}} h^{s_4} \bmod n\|m\|SID)$$

based on the service information m, the additional information SID, the group signature data gs = (c, s1, s2, s3, s4, T1, T2, T3), and the public information stored in public information memory 201.

If the condition that c' = c and s1 is represented by $\varepsilon (\gamma 2 + k) + 1$ bits, s2 by $(\gamma 2 + k) + 1$ bits, s3 by $\varepsilon (\gamma 1 + 2lp + k + 1) + 1$ bits, and s4 by $\varepsilon (21p + k) + 1$ bits is met, then group signature authenticator 204 judges that the signature is legitimate, and sends the judgment result to service provider 203.

If the condition is not met, then group signature authenticator 204 judges that the signature is illegitimate and sends the judgment result to service provider 203.

If the judgment result from group signature authenticator 204 indicates that the signature is legitimate, then service provider 203 distributes the music piece represented by the service information m to user apparatus 3. Thereafter, service provider 203 saves the service information m, the additional information SID, and the group signature data gs = (c, s1, s2, s3, s4, T1, T2, T3) in service log memory 205.

(User identification)

In the event of a distribution problem, outsource apparatus 2 provides the service log to entrustor apparatus 1 to ask entrustor apparatus 1 to identify the user apparatus which has used the service.

Service log provider 206 of outsourcer apparatus 2 sends the service information m, the additional information SID, and the group signature data gs = (c, s1, s2, s3, s4, T1, T2, T3), which correspond to the session for which the user apparatus is to be identified, from the service log saved in service log memory 205, to service log receiver 107 of entrustor apparatus 1.

If user apparatus 3 has calculated the group signature data using only SID of the coupled data of m and SID, then service log provider 206 may send only SID and the group signature data gs = (c, s1, s2, s3, s4, T1, T2, T3).

Service log receiver 107 of entrustor apparatus 1 sends the received data to signatory identifier 108.

Signatory identifier 108 confirms an authentication formula:

[Equation 20]

$$c' = H(g\|h\|y\|a_0\|a\|T_1\|T_2\|T_3\|a_0^c T_1^{s_1 - c2^{\lambda_1}} / (a^{s_2 - c2^{\lambda_1}} y^{s_3}) \bmod n\|$$

$$T_2^{s_1 - c2^{\gamma_1}} / g^{s_3} \bmod n\|T_2^c g^{s_4} \bmod n\|T_2^c g^{s_1 - c2^{\gamma_1}} h^{s_4} \bmod n\|m\|SID)$$

using the public information.

If the group signature data are legitimate, then signatory identifier 108 calculates:

[Equation 21]

$$A' = T_1 / T_2^x \bmod n$$

using x stored in open key memory 104.

Then, signatory identifier 108 searches the member certificates stored in member information memory 106 for Ai that agrees with A'.

If signatory identifier 108 finds Ai in agreement with A', then signatory identifier 108 identifies a user apparatus based on the private information corresponding to Ai.

[Embodiment 2]

A second embodiment of the present invention will be described below. The present embodiment corresponds to the second exemplary embodiment of the present invention.

In the present embodiment, the key generating process, the key notifying process, the member registering process, and the service using process are the same as those according to the first embodiment.

(Charging process)

Entrustor apparatus 1 a receives all the service logs from outsourcer apparatus 2 and performs a charging process for the use of the service. It is assumed that a charging method has been determined in advance and stored in charging information memory 112.

It is assumed that usage frees are defined according to the number of times the service is used.

Service log provider 206 of outsourcer apparatus 2 sends all the information (m, SID, (c, s1, s2, s3, s4, T1, T2, T3)) stored in service log memory 205 to service log receiver 107 of entrustor apparatus 1 a.

When service receiver 107 has received the service log, service receiver 107 sends the service log to signatory identifier 108.

Signatory identifier 108 confirms an authentication formula of the information (m, SID, (c, s1, s2, s3, s4, T1, T2, T3)):

[Equation 22]

$$c' = H(g\|h\|y\|a_0\|a\|T_1\|T_2\|T_3\|a_0^c T_1^{s_1 - c2^{\lambda_1}} / (a^{s_2 - c2^{\lambda_1}} y^{s_3}) \bmod n\|$$

$$T_2^{s_1 - c2^{\gamma_1}} / g^{s_3} \bmod n\|T_2^c g^{s_4} \bmod n\|T_2^c g^{s_1 - c2^{\gamma_1}} h^{s_4} \bmod n\|m\|SID)$$

using the public information.

If the group signature data are legitimate, then signatory identifier 108 calculates signatory identifying information A':

[Equation 23]

$$A' = T_1 / T_2^x \bmod n$$

using xi stored in open key memory 104.

Then, signatory identifier 108 searches the member certificates stored in member information memory 106 for Ai that agrees with A', and identifies the entity which carries Ai as the user.

If signatory identifier 108 has identified the users of all service logs, then signatory identifier 108 provides the information (m, SID, and user names) of all the users to charger 109.

Charger 109 receives the information (m, SID, and user names) and totals the logs of the respective user names.

Then, based on the number of times that the service is used, charger 109 calculates the usage fees of the respective users according to the predetermined fee system.

When charger 109 has determined the usage fees, charger 109 notifies the users of the respective usage fees.

[Embodiment 3]

A third embodiment of the present invention will be described below. The present embodiment corresponds to the third exemplary embodiment of the present invention.

Entrustor apparatus 1 b has two types of member qualifications, i.e., normal membership and special membership.

When user apparatus 3 registers itself as a member in entrustor apparatus 1, user apparatus 3 selects which membership it wants to be enrolled with.

(Key generation)

Group key generator 101 of entrustor apparatus 1 generates a key of a group corresponding to the normal membership.

Specifically, in the same manner as with the first embodiment, group key generator 101 generates parameters ($\varepsilon$, k, lp, $\lambda1$, $\lambda2$, $\gamma1$, $\gamma2$), collision-resistant hash function H, public keys (n, a, a0, g, h, y), member registration keys (p', q'), and open key x.

Group key generator 101 stores the first public information pk1 = ($\varepsilon$, k, lp, $\lambda1$, $\lambda2$, $\gamma1$, $\gamma2$, H, n, a, a0, g, h, y) in public information discloser 102, stores the first member registration keys (p', q') in member registration key memory 103, and stores the first open key x in open key memory 104.

Second group key generator 111 of entrustor apparatus 1 b generates a key of a group corresponding to the special membership.

Specifically, in the same manner as with group key generator 101, second group key generator 111 generates second parameters ($\varepsilon$', k', lp', $\lambda$ $\lambda1$', $\lambda2$', $\gamma1$', $\gamma2$'), second collision-resistant hash function H, second public keys (n', a', a0', g', h', y'), second member registration keys (p", q"), and second open key x'.

Second group key generator 111 stores the second public information pk1 = ($\varepsilon$', k', lp', $\lambda1$', $\lambda2$', $\gamma1$', $\gamma2$', H', n', a', a0', g', h', y') in public information discloser 102, stores the second member registration keys (p", q") in second member registration key memory 112, and stores the second open key x in second open key memory 113.

The second parameters and the second collision-resistant hash function may be of the same values as those of the first public information.

(Key notification)

Entrustor apparatus 1 b sends pk1 and pk2 to outsourcer apparatus 2a entrusted with the supply of services Outsourcer apparatus 2a stores pk1 in public information memory 201 and stores pk2 in second public information memory 207.

(Member registration)

When user apparatus 3 registers itself as a member in entrustor apparatus 1 b, user apparatus 3 sends a membership type as well as private information required for a member registration and a subscription request.

When entrustor apparatus 1 b has received the private information, entrustor apparatus 1 b determines whether a subscription for user apparatus 3 is permitted or not. If entrustor apparatus 1b permits a subscription for user apparatus 3, then entrustor apparatus 1 b sends information representing a permission and group information to user apparatus 3.

When a subscription for user apparatus 3 has been permitted, entrustor apparatus 1 b and user apparatus 3 cooperate with each other in generating a signature key.

The signature key is generated in the same manner as with the first embodiment. If user apparatus 3 selects normal membership, then member registrar 105 of entrustor apparatus 1 uses pk1 and (p', q') to generate a signature key.

If user apparatus 3 selects special membership, then member registrar 105 uses pk2 and (p", q") to generate a signature key.

When user apparatus 3 has selected normal membership, user apparatus 3 acquires a signature key xi and a member certificate (Ai, ei) which satisfies:

[Equation 24]

$$a^{x_i} a_0 = A_i^{e_i}$$

When user apparatus 3 has selected special membership, user apparatus 3 acquires a signature key:

[Equation 25]

$$\hat{x}_i$$

and also acquires a member certificate:

[Equation 27]

$$(\hat{A}_i, \hat{e}_i)$$

which satisfies:

[Equation 26]

$$a^{\hat{x}_i} a_0 = \hat{A}_i^{\hat{e}_i}$$

User apparatus 3 stores the member certificate in member certificate memory 302 and stores the group signature key in group signature key memory 303.

(Service usage)

It is assumed that outsourcer apparatus 2a provides a moving image distribution service only to special members of entrustor apparatus 1 b. User apparatus 3 which have a special member certificate:

[Equation 28]

$$(\hat{A}_i, \hat{e}_i)$$

and a group signature key:

[Equation 29]

$$\hat{x}_i$$

uses the moving image distribution service of outsourcer apparatus 2a.

User apparatus 3 receives a list of moving images that can be distributed to special members from service revealer 202 of outsourcer apparatus 2a

Based on an operation of the user, service selector 304 selects a moving image to be distributed from the list, and sends the selected moving image to service revealer 202 of outsourcer apparatus 2.

Service revealer 202 of outsourcer apparatus 2a sends service information m corresponding to the selected moving image and additional information SID to service selector 304 of user apparatus 3.

Service selector 304 sends m and SID to group signature generator 305.

Group signature generator 305 calculates group signature data using the coupled data of m and SID.

The group signature data are calculated in the same manner as with the first embodiment, except that the second public information pd2 is used rather than the public information pd1.

Group signature generator 305 provides m, SID, and the group signature data gs2 = (c', s1', s2', s3', s4', T1', T2', T3') to service requestor 307.

Service requestor 307 sends the service information m, the additional information SID, the group signature data gs2, and group information V indicative of the special membership to service provider 203 of outsourcer apparatus 2.

When service provider 203 of outsourcer apparatus 2has received m, SID, gs2, and V, service provider 203 sends these items of information to group signature authenticator 204 in order to authenticate the group signature data.

When group signature authenticator 204 has received the group information V, group signature authenticator 204 authenticates the group signature data using the public information that corresponds to the special membership indicated by the group information V.

Specifically, group signature authenticator 204 authenticates group signature data gs2 based on the service information m, the additional information SID, the group signature data gs2, and the second public information pk2 stored in second public information memory 207.

The group signature data are authenticated according to the same authenticating method as with the first embodiment.

Group signature authenticator 204 notifies service provider 203 of information as to whether the signature is legitimate or not.

If the authentication result from group signature authenticator 204 indicates that the signature is legitimate, then service provider 203 judges that user apparatus 3 is a special member of entrustor apparatus 1b, and distributes the moving image represented by the service information m. Thereafter, service provider 203 saves the service information m, the additional information SID, the group signature data gs2, and the group information V, along with time information, in service log memory 205.

(User identification)

Service log provider 206 of outsourcer apparatus 2a sends the service information m, the additional information SID, the group signature data gs2, and the group information V, which are saved in service log memory 205, to service log receiver 107 of entrustor apparatus 1.

Service log receiver 107 sends those data to signatory identifier 108.

When signatory identifier 108 has received the group information V, signatory identifier 108 confirms an authentication formula for the group signature data using the second public information pk2 represented by the group information V.

If the group signature data are legitimate, then signatory identifier 108 calculates signatory identifying information A' i the same manner as with the first embodiment, using x' stored in second open key memory 113.

Then, signatory identifier 108 searches the member certificates stored in member information memory 106 for Ai that agrees with A'.

If signatory identifier 108 finds Ai in agreement with A', then signatory identifier 108 identifies a user apparatus based on the private information corresponding to Ai.

In the present embodiment, the same group signature scheme is employed for the normal member group and the special member group. However, different group signature schemes may be employed.

[Embodiment 4]

A fourth embodiment of the present invention will be described below. The present embodiment corresponds to the fourth exemplary embodiment of the present invention.

(Key generation)

As with the first embodiment, group key generator 101 of entrustor apparatus 1 generates parameters ($\varepsilon$, k, lp, $\lambda 1$, $\lambda 2$, $\gamma 1$, $\gamma 2$), collision-resistant hash function H, public keys (n, a, a0, g, h, y), member registration keys (p', q'), and open key x.

Group key generator 101 stores the first public information pk1 = ($\varepsilon$, k, lp, $\lambda 1$, $\lambda 2$, $\gamma 1$, $\gamma 2$, H, n, a, a0, g, h, y) in public information discloser 102, stores the first member registration keys (p', q') in member registration key memory 103, and stores the first open key x in open key memory 104.

The group key generator (not shown) of second entrustor apparatus 4 generates second parameters ($\varepsilon '$, k', lp', $\lambda 1'$, $\lambda 2'$, $\gamma 1'$, $\gamma 2'$), second collision-resistant hash function H, second public keys (n', a', a0', g', h', y'), second member registration keys (p", q2), and second open key x'.

The second group key generator of second entrustor apparatus 4 stores the second public information pk2 = ($\varepsilon '$, k', lp', ;L 1 , $\lambda 2'$, $\gamma 1'$, $\gamma 2'$, H', n', a', a0', g', h', y') in public information discloser 102, stores the second member registration keys (p", q") in second member registration key memory 112, and stores the second open key x' in second open key memory 113.

The second parameters and the second collision-resistant hash function may be of the same values as those of the first public information.

(Key notification)

Entrustor apparatus 1 and second entrustor apparatus 4 sends pk1 and pk2 to outsourcer apparatus 2.

Outsourcer apparatus 2 stores pk1 in public information memory 201 and stores pk2 in second public information memory 207.

(Member registration)

User apparatus 3 is registered as a member in entrustor apparatus 1 and second user apparatus 5 is registered as a member in second entrustor apparatus 4 in the same manner as with the first embodiment, using the public information and the member registration key.

(Service usage)

User apparatus 3 and second user apparatus 5 uses the same in the same manner as with the first embodiment, using the member certificates and the group signature keys issued respectively thereto.

However, service requestor 307 of user apparatus 3 sends data G1 indicative of entrustor apparatus 1, in addition to the service information m, the additional information SID, and the group signature data gs.

The service requestor (not shown) of second user apparatus 5 sends data G2 indicative of second entrustor apparatus 4, in addition to the service information m, the additional information SID, and the group signature data gs.

If the data sent from service provider 203 include the data G1, then group signature authenticator 204 of outsourcer apparatus 2 authenticates the group signature data using pk1, and sends the authentication result to service provider 203.

If the data sent from service provider 203 include the data G2, then group signature authenticator 204 authenticates the group signature data using pk2, and sends the authentication result to service provider 203.

After having provided the service, service provider 203 provides the service log including the data G1 to service log memory 205, and provides the service log including the data G2 to service log memory 208.

In the present embodiment, the same group signature scheme is employed for entrustor apparatus 1 and second entrustor apparatus 4. However, different group signature schemes may be employed.

In the exemplary embodiments and the embodiments described above, the illustrated arrangements are shown by way of example only, and the present invention is not limited to those arrangements.

Industrial applicability:

According to the present invention, when a provider having members is to entrust a contents provider with the supply of services for the members, the provider can entrust the contents provider with the supply of the services without giving member information of the provider to the contents provider.

Therefore, the present invention is applicable to a provider which is to protect member information and a contents provider which is to reduce the cost of management of private information.

**Claims**

1. A service providing system including a user apparatus, an entrustor apparatus for registering the user apparatus as a member for receiving a predetermined service when a registration request for enrolling the user apparatus as the member is received from the user apparatus, and an outsourcer apparatus for providing said predetermined service to the member which has requested said predetermined service on behalf of said entrustor apparatus, the arrangement being such that when said outsourcer apparatus is requested to provide said predetermined service by the user apparatus, said outsourcer apparatus authenticates whether the user apparatus is said member or not according to a group signature scheme,
   wherein
   said entrustor apparatus comprises:

   a group key generator for generating public information, a member registration key, and an open key for use in said group signature scheme;
   a public information provider for providing the public information generated by said group key generator to said outsourcer apparatus;
   a signature key generator for generating a signature key corresponding to said user apparatus using said public information and said member registration key, in response to said registration request from said user apparatus; and
   a signature information provider for providing the signature key generated by said signature key generator and said public information to said user apparatus;
   said user apparatus comprises:

   a group signature generator for generating group signature data using the signature key and the public information provided by said signature information provider, and a request for said predetermined service; and
   a group signature data provider for providing the group signature data generated by said group signature generator and the request for said predetermined service to said outsourcer apparatus; and
   said outsourcer apparatus comprises:

   an authenticator for authenticating the group signature data provided by said group signature data provider as being legitimate or not using the public information provided by said public information provider; and
   a service provider for providing said predetermined service to said user apparatus in response to the request for said predetermined service if said authenticator judges that said group signature data are legitimate.

2. The service providing system according to claim 1, wherein said user apparatus further comprises:

a converted data provider for generating a group signature key based on said public information, converting said group signature key into converted data, and providing the converted data to said entrustor apparatus;

wherein said signature key generator generates a digital signature using the converted data provided by said converted data provider and said member registration key, thereby generating a member certificate as said signature key; and
said group signature generator generates said group signature data using the request for said predetermined service, said member certificate, said group signature key, and said public information.

3. The service providing system according to claim 1, wherein said entrustor apparatus further comprises:

an acquirer for acquiring said group signature data from said outsourcer apparatus; and
an identifier for identifying the user apparatus, which has provided said group signature data, from among members of said entrustor apparatus, using the group signature data acquired by said acquirer and the open key generated by said group key generator.

4. The service providing system according to claim 3, wherein said entrustor apparatus further comprises:

a charger for calculating a usage fee for the predetermined service used by said user apparatus and charging said user apparatus with the calculated usage fee, based on the user apparatus identified by said identifier and the request for said predetermined service.

5. The service providing system according to claim 1, wherein members of said entrustor apparatus are divided into a plurality of groups;
said group key generator generates public information, a member registration key, and an open key for use in said group signature scheme for each of said groups;
said public information provider provides the public information generated for each of said groups to said outsourcer apparatus;
said signature key generator, responsive to said registration request and group selecting information from said user apparatus, selects one of the groups to which said user apparatus belongs based on said group selecting information, and generates a signature key corresponding to said user apparatus using the public information and the member registration key of the selected group;
said signature information provider provides the signature key generated by said signature key generator, the public information of the group selected by said signature key generator, and group information indicative of the group selected by said signature key generator, to said user apparatus;
said group signature data provider provides the group signature data generated by said group signature generator, the request for said predetermined service, and the group information provided by said signature information provider, to said outsourcer apparatus;
said authenticator authenticates the group signature data provided by said group signature data provider as legitimate or not, using the public information of the group indicated by the group information provided by said group signature data provider; and
said service provider provides the service corresponding to the group indicated by said group information to said user apparatus in response to the request for said predetermined service if said authenticator judges that said group signature data are legitimate.

6. The service providing system according to claim 1, comprising a plurality of said entrustor apparatus, wherein said signature information provider provides said signature key, said public information, and entrustor apparatus information indicative of the entrustor apparatus to said user apparatus;
said group signature data provider provides the group signature data generated by said group signature generator, the request for said predetermined service, and the entrustor apparatus information provided by said signature information provider, to said outsourcer apparatus; and
said authenticator authenticates the group signature data provided by said group signature data provider as legitimate or not, using the public information which is provided by the entrustor apparatus indicated by the entrustor apparatus information provided by said group signature data provider.

7. A service providing method to be carried out by a service providing system including a user apparatus, an entrustor apparatus for registering the user apparatus as a member for receiving a predetermined service when a registration request for enrolling the user apparatus as the member is received from the user apparatus, and an outsourcer apparatus for providing said predetermined service to the member which has requested said predetermined service on behalf of said entrustor apparatus, the arrangement being such that when said outsourcer apparatus is requested to provide said predetermined service by the user apparatus, said outsourcer apparatus authenticates whether the user apparatus is said member or not according to a group signature scheme, said service providing method comprising:

a group key generating step in which said entrustor apparatus generates public information, a member registration key, and an open key for use in said group signature scheme;
a public information providing step in which said entrustor apparatus provides the public information to said outsourcer apparatus;
a signature key generating step in which said entrustor apparatus generates a signature key corresponding to said user apparatus using said public information and said member registration key, in response to said registration request from said user apparatus;
a signature information providing step in which said entrustor apparatus provides the signature key and said public information to said user apparatus;
a group signature generating step in which said user apparatus generates group signature data using the signature key and the public information provided by said signature information provider, and a request for said predetermined service;
a group signature data providing step in which said user apparatus provides the group signature data and the request for said predetermined service to said outsourcer apparatus;
an authenticating step in which said outsourcer apparatus authenticates the group signature data provided by said user apparatus as being legitimate or not, using the public information provided by said entrustor apparatus; and
a service providing step in which said outsourcer apparatus provides said predetermined service to said user apparatus in response to the request for said predetermined service if said group signature data are legitimate.

8. The service providing method according to claim 7, further comprising:

a converted data providing step in which said user apparatus generates a group signature key based on said public information, converts said group signature key into converted data, and provides the converted data to said entrustor apparatus;

wherein in said signature key generating step, said entrustor apparatus generates a digital signature using the converted data and said member registration key, thereby generating a member certificate as said signature key; and
in said group signature generating step, said user apparatus generates said group signature data using the request for said predetermined service, said member certificate, said group signature key, and said public information.

9. The service providing method according to claim 7, further comprising:

an acquiring step in which said entrustor apparatus acquires said group signature data from said outsourcer apparatus; and
an identifying step in which said entrustor apparatus identifies the user apparatus which has provided said group signature data from among members of said entrustor apparatus, using the group signature data and the open key.

10. The service providing method according to claim 9, further comprising:

a charging step in which said entrustor apparatus calculates a usage fee for the predetermined service used by said user apparatus and charging said user apparatus with the calculated usage fee, based on the identified user apparatus and the request for said predetermined service.

11. The service providing method according to claim 7, wherein members of said entrustor apparatus are divided into a plurality of groups;

in said group key generating step, said entrustor apparatus generates public information, a member registration key, and an open key for use in said group signature scheme for each of said groups;
in said public information providing step, said entrustor apparatus provides the public information generated for each of said groups to said outsourcer apparatus;
in said signature key generating step, said entrustor apparatus, responsive to said registration request and group selecting information from said user apparatus, selects one of the groups to which said user apparatus belongs based on said group selecting information, and generates a signature key corresponding to said user apparatus using the public information and the member registration key of the selected group;
in said signature information providing step, said entrustor apparatus provides the generated signature key, the public information of the selected group, and group information indicative of the selected group, to said user apparatus;
in said group signature data providing step, said user apparatus provides the generated group signature data, the request for said predetermined service, and the provided group information, to said outsourcer apparatus;
in said authenticating step, said outsourcer apparatus authenticates the provided group signature data as legitimate or not, using the public information of the group indicated by the group information provided by said user apparatus; and
in said service providing step, said outsourcer apparatus provides the service corresponding to the group indicated by said group information to said user apparatus in response to the request for said predetermined service if said outsourcer apparatus judges that said group signature data are legitimate.

12. The service providing method according to claim 7, wherein said service providing system comprises a plurality of said entrustor apparatus;
in said signature information providing step, each of said entrustor apparatus provides said signature key, said public information, and entrustor apparatus information indicative of the entrustor apparatus to said user apparatus;
in said group signature data providing step, said user apparatus provides the group signature data, the request for said predetermined service, and the entrustor apparatus information provided by said entrustor apparatus, to said outsourcer apparatus; and
in said authenticating step, said outsourcer apparatus authenticates the group signature data provided by said user apparatus as legitimate or not, using the public information which is provided by the entrustor apparatus indicated by the entrustor apparatus information provided by said user apparatus.

13. An outsourcer apparatus connected to a user apparatus and an entrustor apparatus for registering the user apparatus as a member for receiving a predetermined service when a registration request for enrolling the user apparatus as the member is received from the user apparatus, for providing said predetermined service to the member which has requested said predetermined service on behalf of said entrustor apparatus, the arrangement being such that when said outsourcer apparatus is requested to provide said predetermined service by the user apparatus, said outsourcer apparatus authenticates the user apparatus as said member or not according to a group signature scheme, said outsourcer apparatus comprising:

a receiver for receiving public information for use in the group signature scheme from said entrustor apparatus;
an authenticator for authenticating group signature data as legitimate or not using said public information when the group signature data and a request for said predetermined service are received from said user apparatus; and
a service provider for providing said predetermined service to said user apparatus in response to the request for said predetermined service if said authenticator judges that said group signature data are legitimate.

14. The outsourcer apparatus according to claim 13, wherein members of said entrustor apparatus are divided into a plurality of groups;
said receiver receives the public information for use in said group signature scheme for each of said groups from said entrustor apparatus;
said authenticator authenticates the group signature data as legitimate or not, using the public information of the group indicated by group information when said authenticator has received said group signature data, the request for said predetermined service, and the group information indicating the group to which said user apparatus belongs, from said user apparatus; and
said service provider provides the service corresponding to the group indicated by said group information to said user apparatus in response to the request for said predetermined service if said authenticator judges that said group signature data are legitimate.

15. The outsourcer apparatus according to claim 13, which is connected to a plurality of said entrustor apparatus, wherein

when said authenticator has received said group signature data, the request for said predetermined service, and entrustor apparatus information indicative of said entrustor apparatus from said user apparatus, authenticates the group signature data as legitimate or not, using the public information which is provided by the entrustor apparatus indicated by the entrustor apparatus information.

16. A service providing method to be carried out by an outsourcer apparatus connected to a user apparatus and an entrustor apparatus for registering the user apparatus as a member for receiving a predetermined service when a registration request for enrolling the user apparatus as the member is received from the user apparatus, for providing said predetermined service to the member which has requested said predetermined service on behalf of said entrustor apparatus, the arrangement being such that when said outsourcer apparatus is requested to provide said predetermined service by the user apparatus, said outsourcer apparatus authenticates the user apparatus as said member or not according to a group signature scheme, said service providing method comprising:

a receiving step of receiving public information for use in the group signature scheme from said entrustor apparatus;
an authenticating step of authenticating group signature data as legitimate or not using said public information when the group signature data and a request for said predetermined service are received from said user apparatus; and
a service providing step of providing said predetermined service to said user apparatus in response to the request for said predetermined service if said group signature data are legitimate.

17. The service providing method according to claim 16, wherein members of said entrustor apparatus are divided into a plurality of groups;
said receiving step includes receiving the public information for use in said group signature scheme for each of said groups from said entrustor apparatus;
said authenticating step includes authenticating the group signature data as legitimate or not, using the public information of the group indicated by the group information when said group signature data, the request for said predetermined service, and the group information indicating the group to which said user apparatus belongs, are received from said user apparatus; and
said service providing step includes providing the service corresponding to the group indicated by said group information to said user apparatus in response to the request for said predetermined service if said group signature data are legitimate.

18. The service providing method according to claim 16; wherein said outsourcer apparatus is connected to a plurality of said entrustor apparatus, wherein
said authenticating step inclides, when said group signature data, the request for said predetermined service, and entrustor apparatus information indicative of said entrustor apparatus are received from said user apparatus, authenticating the group signature data as legitimate or not, using the public information which is provided by the entrustor apparatus indicated by the entrustor apparatus information.

19. A program for controlling a computer connected to a user apparatus and an entrustor apparatus for registering the user apparatus as a member for receiving a predetermined service when a registration request for enrolling the user apparatus as the member is received from the user apparatus, for providing said predetermined service to the member which has requested said predetermined service on behalf of said entrustor apparatus, the arrangement being such that when said computer is requested to provide said predetermined service by the user apparatus, said computer authenticates the user apparatus as said member or not according to a group signature scheme, said program enabling said computer to perform a service process comprising:

a receiving process for receiving public information for use in the group signature scheme from said entrustor apparatus;
an authenticating process for authenticating group signature data as legitimate or not using said public information when the group signature data and a request for said predetermined service are received from said user apparatus; and
a service providing process for providing said predetermined service to said user apparatus in response to the request for said predetermined service if said group signature data are legitimate.

Fig. 1

Fig. 2

EP 1 895 709 A1

34

Fig.3

Fig. 4

Fig. 5

EP 1 895 709 A1

**1a — ENTRUSTOR APPARATUS**

SERVICE LOG RECEIVER 107
- S303 RECEIVE LOG

102 PUBLIC INFORMATION DISCLOSER

104 OPEN KEY MEMORY

106 MEMBER INFORMATION MEMORY

SIGNATORY IDENTIFIER 108
- S304 IDENTIFY SIGNATORY FROM GROUP SIGNATURE DATA

110 CHARGE INFORMATION MEMORY

CHARGER 109
- S305 TOTAL USAGE STATUSES FOR RESPECTIVE USER APPARATUS
- S306 DETERMINE USAGE FEES
- S307 NOTIFY USER APPARATUS

**2 — OUTSOURCER APPARATUS**

205 SERVICE LOG MEMORY

SERVICE LOG PROVIDER 206
- S301 READ LOG
- S302 SEND LOG

**3 — USER APPARATUS**

Fig. 6

Fig. 7

## INTERNATIONAL SEARCH REPORT

| International application No. |
|---|
| PCT/JP2006/310909 |

A. CLASSIFICATION OF SUBJECT MATTER
*H04L9/32*(2006.01)i, *G06F21/20*(2006.01)i, *G06F21/24*(2006.01)i, *G06Q10/00*(2006.01)i, *G06Q50/00*(2006.01)i

According to International Patent Classification (IPC) or to both national classification and IPC

B. FIELDS SEARCHED

Minimum documentation searched (classification system followed by classification symbols)
H04L9/32, G06F21/20, G06F21/24, G06Q10/00, G06Q50/00

Documentation searched other than minimum documentation to the extent that such documents are included in the fields searched
Jitsuyo Shinan Koho      1922-1996   Jitsuyo Shinan Toroku Koho   1996-2006
Kokai Jitsuyo Shinan Koho  1971-2006   Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-320562 A (Toshiba Corp.), 11 November, 2004 (11.11.04), | 1-4,7-10,13, 16,19 |
| Y | Par. Nos. [0027] to [0208]; Figs. 1 to 12 (Family: none) | 5,6,11,12, 14,15,17,18 |
| X | Takehisa KATO, Koji OKADA, Takuya YOSHIDA, "Tokumei Ninsho Gijutsu to sono Oyo", | 1-4,7-10,13, 16,19 |
| Y | Toshiba Review, Vol.60, No.6, pages 23 to 27 | 5,6,11,12, 14,15,17,18 |
| Y | JP 2004-54905 A (Toshiba Corp.), 19 February, 2004 (19.02.04), Par. Nos. [0024] to [0230]; Figs. 1 to 9 (Family: none) | 5,6,11,12, 14,15,17,18 |

[X] Further documents are listed in the continuation of Box C.    [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 August, 2006 (09.08.06) | 15 August, 2006 (15.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/310909 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Giuseppe Ateniese, Jan Camenisch, Marc Joye, and Gene Tsudik, A Practical and Provably Secure Coalition-Resistant Group Signature Scheme, CRYPTO 2000, LNCS 1880, pages 255 to 270, 2000 | 1-19 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004038494 A

### Non-patent literature cited in the description

- A Practical and Provable Secure Coalition-Resistant Group Signature Scheme. **G. ATENIESE ; J. CAMENISCH ; M. JOYE ; G. TSUDIK.** Advances in Cryptology - CRYPTO 2000, LNCS. Springer-Verlag, 2000, vol. 1880, 255-270